# EUROPEAN PATENT APPLICATION

(11) **EP 2 197 223 A2**
(43) Date of publication of application: **16.06.2010**
(21) Application number: 09179060.0
(22) Date of filing: 14.12.2009
(51) Int. Cl.: H04W 16/16, H04W 48/00, H04W 88/10

(54) **Communication apparatus and mobile terminal**

(30) Priority: 15.12.2008 JP 2008318966
(71) Applicant: FUJITSU LIMITED, Kawasaki-shi, Kanagawa 211-8588 (JP)
(72) Inventor: Shinozaki, Atsushi, Kawasaki-shi Kanagawa 211-8588 (JP)
(74) Representative: Wilding, Frances Ward

(57) **Abstract**

A communication apparatus which performs radio communication with a mobile terminal which is able to originate a call by using either a first or a second phone number as a caller source number, includes a radio interface unit which performs radio communication with the mobile terminal, and a transfer unit. When the radio communication unit receives a first call using the first phone number from the mobile terminal, the transfer unit transfers the first call from the mobile terminal to a first communication network corresponding to the first phone number to perform connection processing to a destination device. When the radio communication unit receives a second call using the second phone number from the mobile terminal, the transfer unit transfers the second call from the mobile terminal to a second communication network corresponding to the second phone number to perform the connection processing to a destination device.

## Description

### CROSS-REFERENCE TO RELATED APPLICATION

This application is based upon and claims the benefit of priority of the prior Japanese Patent Application No. 2008-318966, filed on December 15, 2008, the entire contents of which are incorporated herein by reference.

### TECHNIAL FIELD

The embodiments of the invention discussed herein are related to a communication apparatus and a mobile terminal.

### BACKGROUND

In recent years, there has been a One Phone Two Number Service. In this service, two numbers used for communication are allocated to one mobile terminal, and the communication is performed by using either number.

A One Phone Two Number service is used for a Fixed Mobile Convergence (FMC) service, for example. In a FMC service using a One Phone Two Number service, one number allocated to a mobile terminal is a number to be used for access of mobile communication, and the other number is a number to be used for access by a fixed phone. By using two numbers for different purposes as described above, services according to an environment are provided.

There is another One Phone Two Number service in which both of the two numbers allocated to the mobile terminal are used for access of mobile communication. In this case, a user may use two numbers for different purposes such as business, private life, and the like.

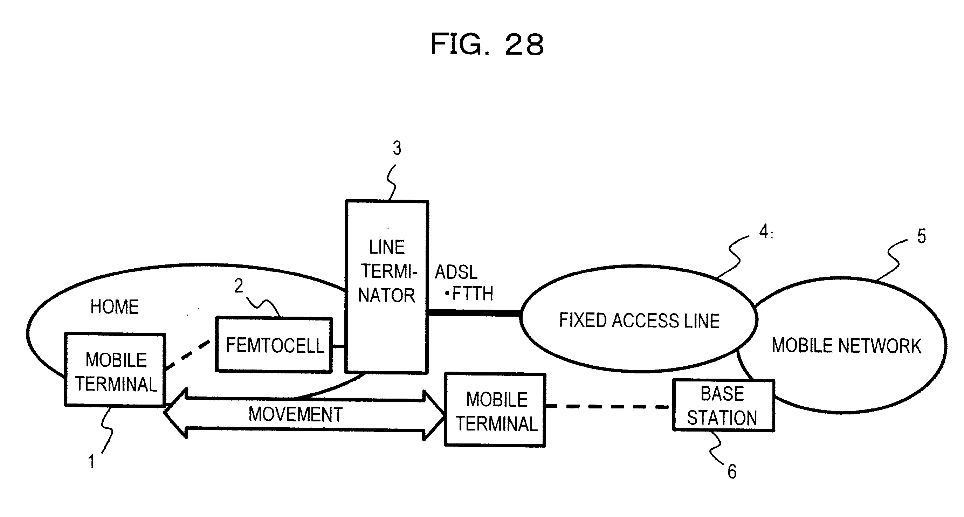

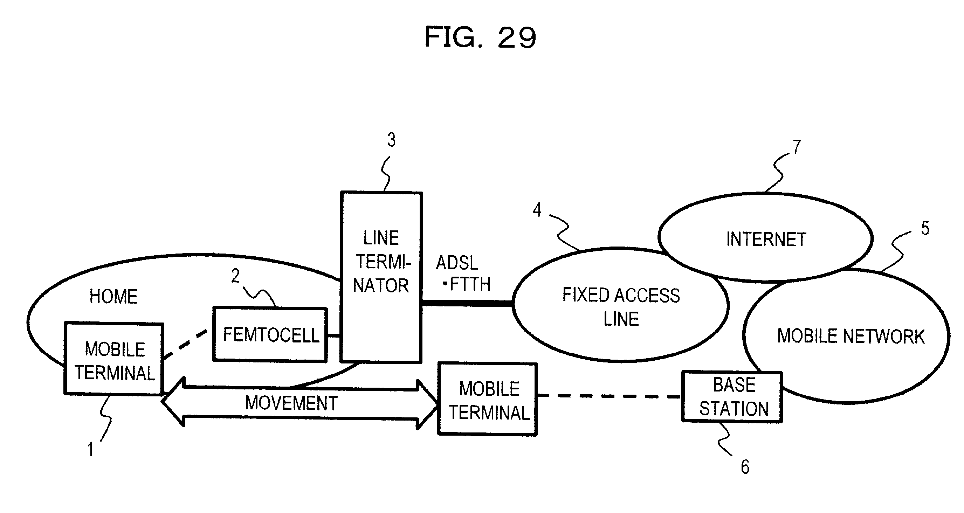

As the use of the mobile terminals has increased, the area in which communication may be performed by mobile terminals has been increased. A small base station, called a femtocell base station (hereinafter sometimes referred to as a femtocell) assumed to be intended for home use, for example, is provided to increase the communication area. FIG. 28 and FIG. 29 are diagrams illustrating access to a mobile network through a femtocell. In the network configuration illustrated in FIG. 28, a mobile terminal 1 communicates with a partner terminal through a femtocell 2, a line terminator 3, a fixed line, a fixed access line 4, and a mobile network 5. In the network configuration illustrated in FIG. 29, the access from the mobile terminal 1 to the fixed access line 4 is the same as in FIG. 28. The mobile terminal 1 communicates with the partner terminal by accessing the mobile network 5 through the Internet 7 from the fixed access line 4 in FIG. 29. In this example, a Fiber to the Home (FTTH), an Asymmetric Digital Subscriber Line (ADSL), or the like is used as a fixed line. In the configurations illustrated in FIG. 28 and FIG. 29, a mobile communication service may be used even in an environment such as a home in which radio waves from a base station 6 outside hardly reach the mobile terminal 1. In a communication area of the femtocell 2, an Internet Protocol (IP) phone or the like may be used.

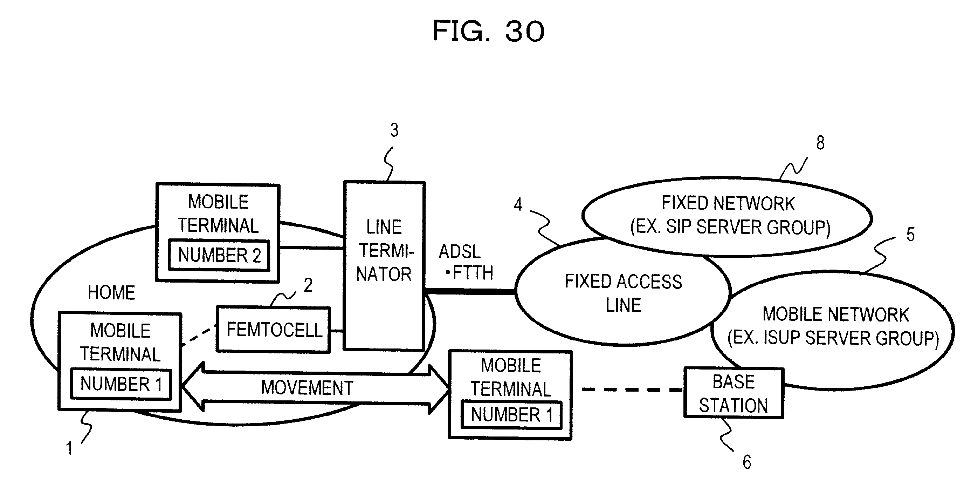

FIG. 30 is a diagram illustrating a communication system in which communication through a fixed phone line by the IP phone is present with communication through the femtocell 2. The communication through the femtocell 2 is the same as in FIG. 28 and FIG. 29. However, as for the IP phone, a number 2 allocated to the IP phone is used to access the fixed network 8 through the line terminator 3, the fixed line, and fixed access line 4 to communicate with the partner terminal.

A related technique provides a subscriber VoIP terminator that can manage location information indicating a connection location of a mobile terminal device in a communication network (see, for example, Japanese Laid-open Patent Publication No. 2007-311870). Another disclosed technique provides a system that includes a radio telephone device having a ROM that stores an extension number of a mobile phone in association with an external number of the mobile phone (see, for example, Japanese Laid-open Patent Publication No. 06-62455). In this system, if the mobile phone, which is called by the extension number, is not in a calling area, a code corresponding to the external number stored in the ROM is output to a voice codec unit. Then the mobile phone is called by another radio telephone system.

The environment corresponding to the radio communication has been organized by the improvement of the service by the radio communication and the development of base stations. However, there are still problems in the communication using a mobile terminal that may occur in this and other radio communication environments. For example, voice communication quality of voice communication using a mobile terminal is often inferior to that in a case of using a fixed phone line. To establish a connection between a base station with which the mobile terminal performs the communication and a destination, the voice communication quality may be decreased if the line is used for data communication for both voice data and packet communication. For example, when the mobile network is connected to the base station through the Internet, the voice communication quality is likely to be decreased depending on a congestion state of the Internet.

Furthermore, if the mobile terminal is easily used in, for example, a closed place that is considered to be an environment where the radio waves from base stations hardly reach, each member of a certain group such as a family and a Small Office Home Office (SOHO) may use a mobile terminal, respectively. In this case, a phone that receives calls as the representative of members of the group, such as a family or a SOHO, may not be decided, so that security problems and business problems may occur. The present One Phone Two Number service may not be able to provide a representative number of a plurality of mobile terminals.

### SUMMARY

Accordingly, it is considered desirable to improve convenience in communication using a mobile terminal.

According to one aspect of the invention (or at least an embodiment of one aspect), a communication apparatus performs radio communication with a mobile terminal which is able to originate a call by using either a first phone number or a second phone number as a caller source number. The communication apparatus includes a radio interface unit which performs radio communication with the mobile terminal, and a transfer unit. When the radio interface unit receives a first call using the first phone number from the mobile terminal, the transfer unit transfers the first call from the mobile terminal to a first communication network corresponding to the first phone number to perform connection processing to a destination device of the first call. When the radio interface unit receives a second call using the second phone number from the mobile terminal, the transfer unit transfers the second call from the mobile terminal to a second communication network corresponding to the second phone number to perform connection processing to a destination device of the second call.

According to another aspect of the invention (or at least an embodiment of another aspect), a communication apparatus performs radio communication with a plurality of mobile terminals. The communication apparatus includes a wired interface unit which receives a communication request transmitted from a caller source device to a specified destination number. The communication apparatus also includes a storage unit which stores correspondence of an identification number of the mobile terminal, a common number indicating a number which is common to the plurality of mobile terminals, and an individual number allocated to each mobile terminal. The communication apparatus further includes a transfer unit which transfers the incoming call to the incoming call unit to process connection processing between any of the plurality of mobile terminals and the caller source device. The transfer unit processes calling processing of a mobile terminal, which is specified with the destination number, of the plurality of mobile terminals based on the correspondence.

According to yet another aspect of the invention (or at least an embodiment of yet another aspect), a method of establishing a communication path includes receiving, at a femtocell, a setup message from a mobile terminal requesting communication between the mobile terminal and a destination device. The setup message identifies a first number used by the mobile terminal to originate the communication and the mobile terminal is configured to originate communications by using the first number or a second number. The method also includes detecting the first number, authenticating the first number and determining whether the setup message includes additional information. The method further includes, if the setup message does not include additional information, transmitting, to a network associated with the destination device, a message requesting to establish a communication path with the destination device through the network associated with the destination device. The message identifies the second number to be reported to the destination device.

### BRIEF DESCRIPTION OF THE DRAWINGS

FIG. 1 is a diagram illustrating an example of a configuration of a mobile terminal,

FIG. 2 is a diagram illustrating information elements of a calling party BCD number,

FIG. 3 is a diagram illustrating an example of a configuration of a femtocell,

FIG. 4 is a diagram illustrating an example of information stored in a storage unit,

FIG. 5 is a diagram illustrating an example of a network that may be used for communication using a mobile terminal and a femtocell,

FIG. 6 is a diagram illustrating information stored by each information element on a network,

FIG. 7 is a diagram illustrating a call originated from a mobile terminal through a fixed network,

FIG. 8 is a sequence diagram illustrating an operation of generating a call from a mobile terminal,

FIG. 9 is a diagram illustrating a first example of an SIP INVITE message,

FIG. 10 is a diagram illustrating information elements of a calling party subaddress,

FIG. 11 is a diagram illustrating an example of the SIP INVITE message by which a private number may be reported,

FIG. 12 is a diagram illustrating setting examples of correspondence between a record content of a message and a caller ID to be reported,

FIG. 13 is a flowchart illustrating an operation by a femtocell when a call is originated from a mobile terminal,

FIG. 14 is a diagram illustrating an example of a configuration of a mobile terminal that may select a network,

FIG. 15 is a diagram illustrating information elements of a called party subaddress,

FIG. 16 is a diagram illustrating a call originated from a mobile terminal through a selected network,

FIG. 17 is a sequence diagram illustrating an operation performed when a call is originated through the selected network,

FIG. 18 is a diagram illustrating an example of selection logic of a network that is used to establish a communication path,

FIG. 19 is a flowchart illustrating an example of an operation of a femtocell,

FIG. 20 is a diagram illustrating a communication path from a caller source device to a mobile terminal,

FIG. 21 is a sequence diagram illustrating an operation performed when an incoming call to a representative number is requested from a fixed network,

FIG. 22A is a diagram illustrating an example of correspondence between a description of an INVITE message and an incoming call number,

FIG. 22B is a diagram illustrating an example of correspondence between a description of an INVITE message and an incoming call number,

FIG. 23 is a diagram illustrating information elements of a called party BCD number,

FIG. 24 is a flowchart illustrating an operation of a femtocell when an incoming call to the representative number is requested,

FIG. 25 is a sequence diagram illustrating an operation performed when an incoming call to a specified mobile terminal from a fixed network is requested,

FIG. 26A is a diagram illustrating an example of communications performed in the first embodiment to the third embodiment,

FIG. 26B is a diagram illustrating an example of communications performed in the first embodiment to the third embodiment,

FIG. 27 is a table illustrating an example of evaluation criteria of voice communication quality,

FIG. 28 is a diagram illustrating access to a mobile network through a femtocell,

FIG. 29 is a diagram illustrating another access to a mobile network through a femtocell, and

FIG. 30 is a diagram illustrating a communication system in which communication through a fixed phone line by an IP phone is present with communication through a femtocell.

### DETAILED DESCRIPTION

Embodiments of the present invention will be described below in detail with reference to the figures. However, it will be clearly appreciated that these descriptions are given only so that the invention may be better understood, and that the invention is therefore not limited to or by any of the particular features shown or described. As described below, it is assumed that a representative number that is commonly used in a plurality of mobile terminals and a unique private number that is inherent in each mobile terminal are allocated to each mobile terminal. The mobile terminal may perform communication by using either the representative number or the private number. The method for allocating the numbers used in the description below is just an example. Therefore, the number of numbers allocated to the mobile terminal and settings related to the allocated phone numbers can be arbitrary. One or more of the representative number or the private number may be a 0ABJ number which may be used for the fixed network. One or more of the representative number or the private number may be a number for the mobile network. In the example described below, as an example for the description, the representative number is the 0ABJ number, and the private number starting with 090 is a number for the mobile network.

### [a] Configuration of a Mobile Terminal

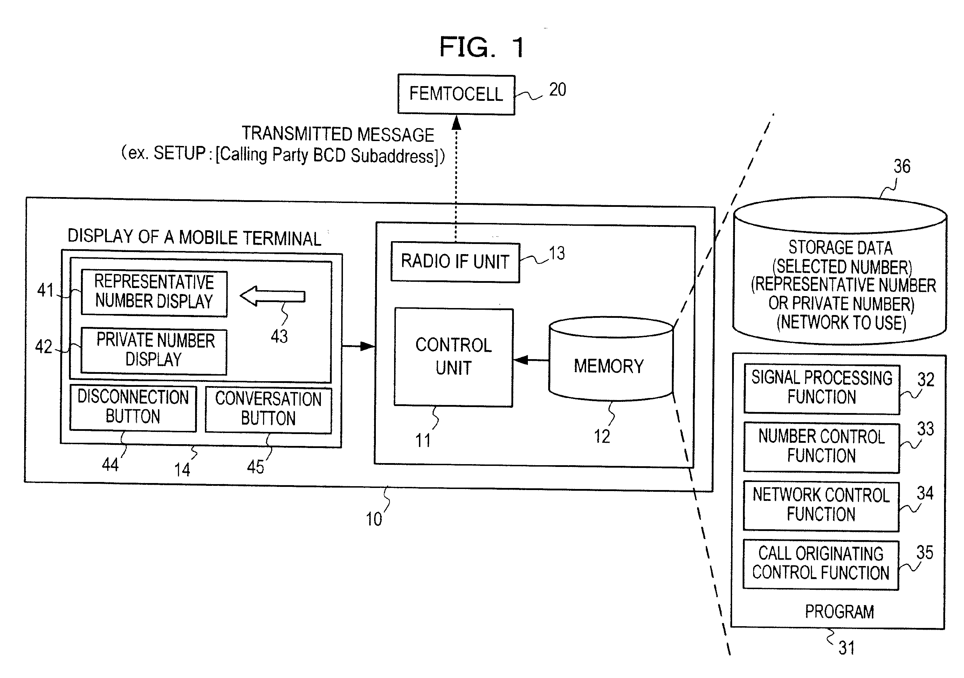

FIG. 1 is a diagram illustrating an example of a configuration of a mobile terminal 10. The mobile terminal 10 includes a control unit 11, a memory 12, a radio interface unit 13, and a display. A screen such as a number selection screen 14 is displayed on the display. The memory 12 stores a program 31, a storage data 36, and the like. The program 31 read by the control unit 11 achieves a signal processing function 32, a number control function 33, a network control function 34, and a call originating control function 35.

The control unit 11 controls operations performed in the mobile terminal 10 by the signal processing function 32, the number control function 33, the network control function 34, and the call originating control function 35. The control unit 11 generates a message used for call control of a Connection Management (CM) function or the like by the signal processing function 32. For example, Call Control (CC) is used to establish a communication path for voice communication from the mobile terminal 10 to a destination device. At this time, as described by a dotted arrow in FIG. 1, a message requesting communication start is transmitted from the mobile terminal 10 to a femtocell 20.

By the signal processing function 32, the control unit 11 generates a message and writes information corresponding to a request of communication in the message. As a message requesting communication, a SETUP message or the like may be used. For a process by the signal processing function 32, an identifier corresponding to the number used for making a call is used. As the identifier, for example, the calling party Binary Coded Decimal (BCD) number included in the SETUP message may be used.

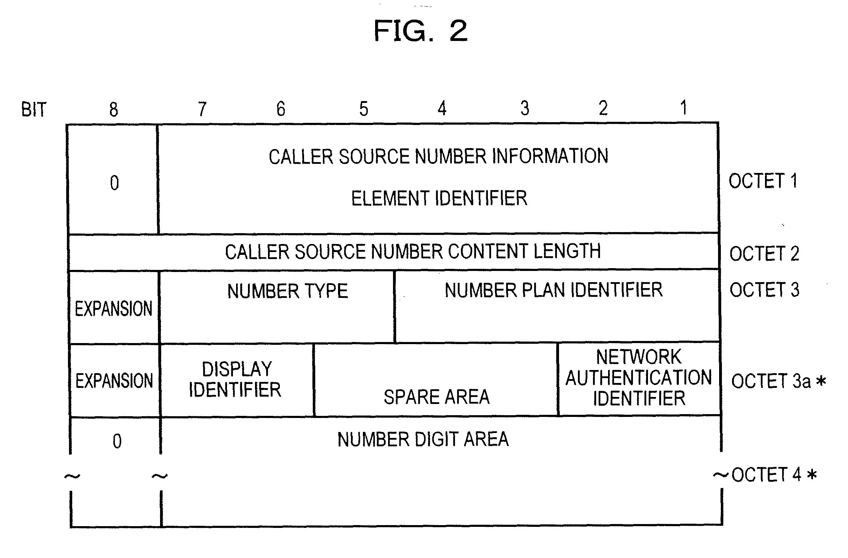

FIG. 2 is a diagram illustrating information elements of the calling party BCD number. The phone number that the mobile terminal 10 uses for communication is written in a number digit area, which is one of the information elements illustrated in FIG. 2. In addition to the information elements, such as a caller source number information element identifier and a number type, the calling party BCD number includes a spare area, and the spare area may store the information used for the call control performed by the signal processing function 32.

By the number control function 33 illustrated in FIG. 1, the control unit 11 controls selection of the phone number to be used for communication. For example, the display provided in the mobile terminal 10 displays the number selection screen 14, and the phone number selected by input from a user is identified, by the number control function 33, as the phone number to be used for communication. As described below, when the user selects a number to be reported as a caller source number to the destination device, control using the number selection screen 14 or the like is performed by the number control function 33.

The example of the number selection screen 14 illustrated in FIG. 1 includes a representative number display 41, a private number display 42, a number selection 43, a disconnection button 44, and a conversation button 45. In this example, the mobile terminal 10 is able to use two phone numbers, that is, the representative number and the private number, for communication. The user may use the number selection 43 to select either the representative number or the private number and may use an input device (not illustrated) of the mobile terminal 10 to change the location in which the number selection 43 is displayed, and then the user may change the number to be selected. In a state where the number selection 43 selects either the representative number or the private number, if the user selects the conversation button 45, the number selected by the number selection 43 is selected as the number to be used for communication. As illustrated in the example in FIG. 1, in a state where the representative number display 41 is selected, if the user selects the conversation button 45, the representative number is identified, by the number control function 33, as the number to be used for communication. Furthermore, if the user selects the disconnection button 44 in the number selection screen 14, neither number is identified, by the number control function 33, as the number that is not selected to be used for communication. When the number selection screen 14 is displayed on the display, the control unit 11 accesses the memory 12 to use the storage data 36.

When the number to be used for communication is identified by the number control function 33, the control unit 11 may temporally store the selected number as the storage data 36. The number used for communication is used for processes using the signal processing function 32, the network control function 34, and the call originating control function 35.

By the network control,function 34, the control unit 11 controls specification of a network to be used to establish a communication path from the mobile terminal 10 to the destination device. Furthermore, when the network to be used preferentially is specified before the mobile terminal 10 originates a call, control for establishing a communication path is performed by the network control function 34 by using the specified network. The network control function 34 will be described below in detail.

By the call originating control function 35, the control unit 11 performs control for originating a call by using the selected phone number. The mobile terminal 10 performs the control for communication. Control other than the control performed by the signal processing function 32, the number control function 33, or the network control function 34 is performed by the call originating control function 35.

As the storage data 36, the memory 12 stores a phone number that the mobile terminal 10 may use, information related to the network, and an identifier, which is added to the mobile terminal 10, in the mobile network. The radio interface unit 13 performs radio communication with the femtocell 20.

### [b] Configuration of a Femtocell

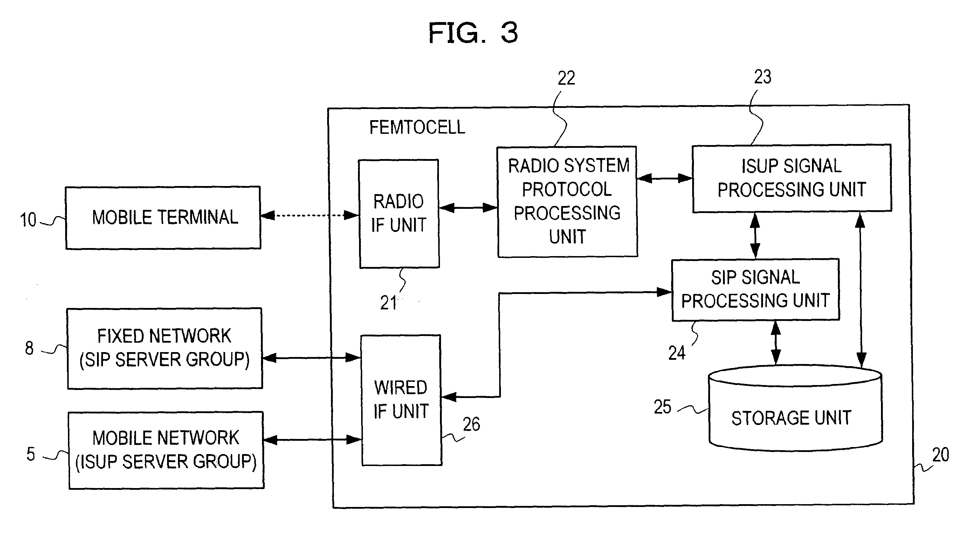

FIG. 3 is a diagram illustrating an example of a configuration of the femtocell 20. The femtocell 20 includes a radio interface unit 21, a radio system protocol processing unit 22, an ISDN User Part (ISUP) signal processing unit 23, a Session Initiation Protocol (SIP) signal processing unit 24, a storage unit 25, and a wired interface unit 26. The femtocell 20 performs radio communication with the mobile terminal 10 through the radio interface unit 21 and establishes communication paths through a mobile network 5 and a fixed network 8 connecting from the wired interface unit 26 by fixed lines. In FIG. 3, the fixed network 8 is an SIP server group and the mobile network 5 is an ISUP server group. However, these server groups are just examples. Protocols used to form communication paths through the mobile network 5 and the fixed network 8 are arbitrary and other protocols besides those specifically identified herein can alternately or additionally be implemented. In some examples, the mobile network 5 and the fixed network 8 may use the same protocol.

An example of radio communication using the radio interface unit 21 of the femtocell 20 and the mobile terminal 10 includes reception of a SETUP message, call of the mobile terminal 10, or the like. For example, when the mobile terminal 10 requests a communication path to be established and the femtocell 20 receives the SETUP message, the femtocell 20 receives the SETUP message through the radio interface unit 21 and then performs a process. On the other hand, when the femtocell 20 establishes a communication path to the mobile terminal 10 as a destination, the femtocell 20 transmits a call signal or a paging signal by using the radio interface unit 21.

By processing the data input from the radio interface unit 21, the radio system protocol processing unit 22 identifies the information reported from the mobile terminal 10. For example, the radio system protocol processing unit 22 determines a type of the information received from the mobile terminal 10. If the SETUP message is received, the radio system protocol processing unit 22 identifies that the SETUP message is a message requesting to start communication and then performs a process. The radio system protocol processing unit 22 performs a process corresponding to an arbitrary protocol used for communication, such as 3rd Generation Partnership,Project (3GPP) or 3GPP2, between the femtocell 20 and the mobile terminal 10. Alternately, the radio system protocol processing unit 22 can perform a process corresponding to communication protocols other than 3GPP or 3GPP2.

Furthermore, the radio system protocol processing unit 22 obtains identification information that is used to identify the mobile terminal 10 with which the femtocell 20 performs radio communication. The identification information may be arbitrary information that is used to identify the mobile terminal 10, such as an International Mobile Subscriber Identity (IMSI) or a phone number that is allocated to the mobile terminal 10. The radio system protocol processing unit 22 reports the obtained information to the ISUP signal processing unit 23. At this time, the radio system protocol processing unit 22 may output some or all of the data input from the radio interface unit 21 to the ISUP signal processing unit 23. The radio system protocol processing unit 22 reports, to the ISUP signal processing unit 23, the number that is reported as the phone number of the caller source to the destination device by the mobile terminal 10, the information used to specify the number to be reported to the destination, and the information used for the call control processing. The number that is reported as the phone number of the caller source by the mobile terminal 10 and the information used to specify this number may be described as "number specification information."

When the femtocell 20 receives a request for establishing a communication path through the mobile network 5 and/or the fixed network 8 to the mobile terminal 10, the radio system protocol processing unit 22 calls the mobile terminal 10 that is communicable with the femtocell 20. For example, the radio system protocol processing unit 22 may generate and transmit a paging signal to the mobile terminal 10 as a calling target. In the femtocell 20, connection processing between the called mobile terminal 10 and the caller source device may be performed by the radio system protocol processing unit 22. The connection processing between the mobile terminal 10 and the caller source device may be performed by a part or all of the radio interface unit 21, the radio system protocol processing unit 22, the ISUP signal processing unit 23, and the SIP signal processing unit 24 according to the mounting.

In the femtocell 20, a radio communication function may be provided by operations of the radio interface unit 21 and the radio system protocol processing unit 22. The radio communication may be performed by the radio interface unit 21, the radio system protocol processing unit 22, and the ISUP signal processing unit 23 according to the mounting. Moreover, the SIP signal processing unit 24 may be related to the radio communication.

The ISUP signal processing unit 23 obtains the caller source number of the mobile terminal 10 from the information reported from the radio system protocol processing unit 22. Furthermore, the ISUP signal processing unit 23 performs simple authentication by comparing the obtained number to the information that is stored in advance in a database in the storage unit 25. When obtaining the number stored in the storage unit 25, the ISUP signal processing unit 23 reports the fact that the number is obtained to the SIP signal processing unit 24. On the other hand, when the femtocell 20 receives an incoming call from the mobile network 5 or the fixed network 8, the ISUP signal processing unit 23 specifies the mobile terminal 10 as a calling target based on the information reported from the SIP signal processing unit 24. After specifying the mobile terminal 10 as a calling target, the ISUP signal processing unit 23 reports the specified mobile terminal 10 to the radio system protocol processing unit 22.

When the number of the mobile terminal 10 is reported from the ISUP signal processing unit 23, the SIP signal processing unit 24 determines that a communication path from the reported mobile terminal 10 to the destination device is requested to be established. Then the SIP signal processing unit 24 generates and outputs a message requesting to establish a communication path to the wired interface unit 26. The wired interface unit 26 outputs the input message to a fixed line. On the other hand, when receiving, from the fixed line through the wired interface unit 26, the message requesting to establish a communication path, the SIP signal processing unit 24 determines that the incoming call to the mobile terminal 10 is received by the femtocell 20. The SIP signal processing unit 24 checks and reports the number included in the received message to the ISUP signal processing unit 23.

As described above, by the ISUP signal processing unit 23 and the SIP signal processing unit 24, the femtocell 20 may provide a connection processing function to the destination corresponding to a call originated from the mobile terminal 10. In addition to the ISUP signal processing unit 23 and the SIP signal processing unit 24, the radio interface unit 21 and the radio system protocol processing unit 22 may be related to realization of the connection processing function. Furthermore, by the wired interface unit 26 and the SIP signal processing unit 24, a call receiving function to process a communication request transmitted from the caller source device to the mobile terminal 10 may be provided. According to the mounting, in addition to the SIP signal processing unit 24 and the wired interface unit 26, the ISUP signal processing unit 23 and the radio system protocol processing unit 22 may be related to incoming call processing.

Thus, any one or more of the radio interface unit 21, radio system protocol processing unit 22, ISUP signal processing unit 23, the SIP signal processing unit 24, and the wired interface unit 26 can be used individually or in any combination to transfer calls from the mobile terminal 10 to the fixed network 8 or the mobile network 5. As such, the radio interface unit 21, radio system protocol processing unit 22, ISUP signal processing unit 23, SIP signal processing unit 24, and the wired interface unit 26 can generally be referred to individually or in any combination as a transfer unit. In some embodiments, such a transfer unit is configured to transfer a first call using the representative number from the mobile terminal to the fixed network 8 to perform connection processing to a destination device, and is further configured to transfer a second call using the private number from the mobile terminal to the mobile network 5 to perform connection processing to a destination device.

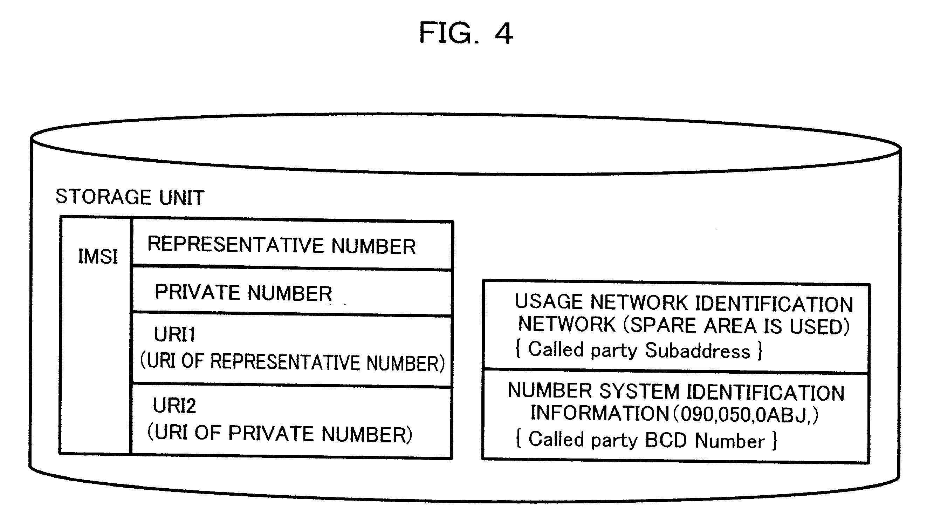

The storage unit 25 stores the database that is used by the ISUP signal processing unit 23 and the SIP signal processing unit 24 to perform simple authentication and the like. FIG. 4 is a diagram illustrating an example of the information stored in the storage unit 25. In this example, as for the mobile terminal 10, the representative number and the private number are stored in association with the IMSI of the mobile terminal 10. The storage unit 25 stores an identifier of a fixed phone terminal corresponding to the representative number. A Uniform Resource Identifier (URI), for example, may be used as the identifier of the fixed phone terminal. The URI corresponding to the phone number for the mobile network may be obtained by the femtocell 20 and stored in the storage unit 25.

The storage unit 25 further stores information that may be used to specify each network. Moreover, the storage unit 25 stores information related to a number system of the phone number used for communication and of the number to be reported as the caller source number. As an example of the information related to the number system, information can be used to identify whether a number corresponds to the 0ABJ number, the 090 number, or the 050 number. As an example, the storage unit 25 may store the information, which may be used to specify a network, as a called party subaddress and may store the information, which is related to the number system, as a called party BCD number. The example of the identification information will be described below. The information that may be used to specify each network may be described as "network identification information."The network identification information may be information used to identify one mobile network 5 of a plurality of mobile networks 5 or may be information used to identify one fixed network 8 of a plurality of fixed networks 8.

As described above, the configuration of the storage unit 25 illustrated in FIG. 4 is an example. The storage unit 25 may also store correspondence between a phone number and a network corresponding to the phone number. For example, the storage unit 25 may store the representative number in association with the fixed network 8 and may store the private number in association with the mobile network 5. Furthermore, when the plurality of mobile networks 5 or the plurality of fixed networks 8 are present, the storage unit 25 may store the representative number in association with any of the plurality of mobile networks 5 and may store the private number in association with any of the plurality of the fixed network 8.

### [c] Example Network Configuration

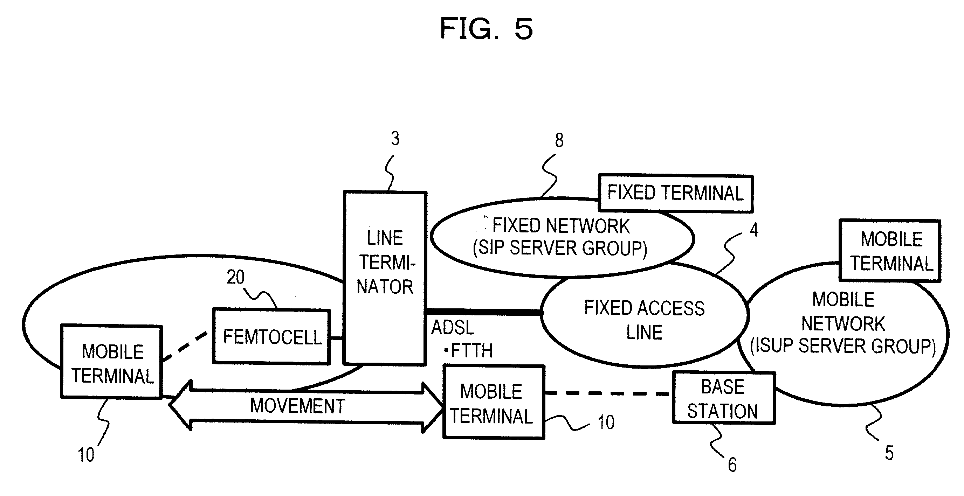

FIG. 5 is a diagram illustrating an example of a network that may be used for communication using the mobile terminal 10 and the femtocell 20. The femtocell 20 is connected to the line terminator 3. The line terminator 3 is connectable to the fixed network 8 and the mobile network 5 through a fixed line, such as ADSL, and the fixed access line 4. When the mobile terminal 10 is located in the communication area of the femtocell 20, the mobile terminal 10 may establish a communication path using the mobile network 5 and a communication path using the fixed network 8 through the femtocell 20. Even when the mobile terminal 10 is located outside the communication area of the femtocell 20, the mobile terminal 10 may establish a communication path to a communication partner through the base station 6 in the communication area of the base station 6. A broadband router (not illustrated), which is used to form a home LAN, may be provided between the femtocell 20 and the line terminator 3.

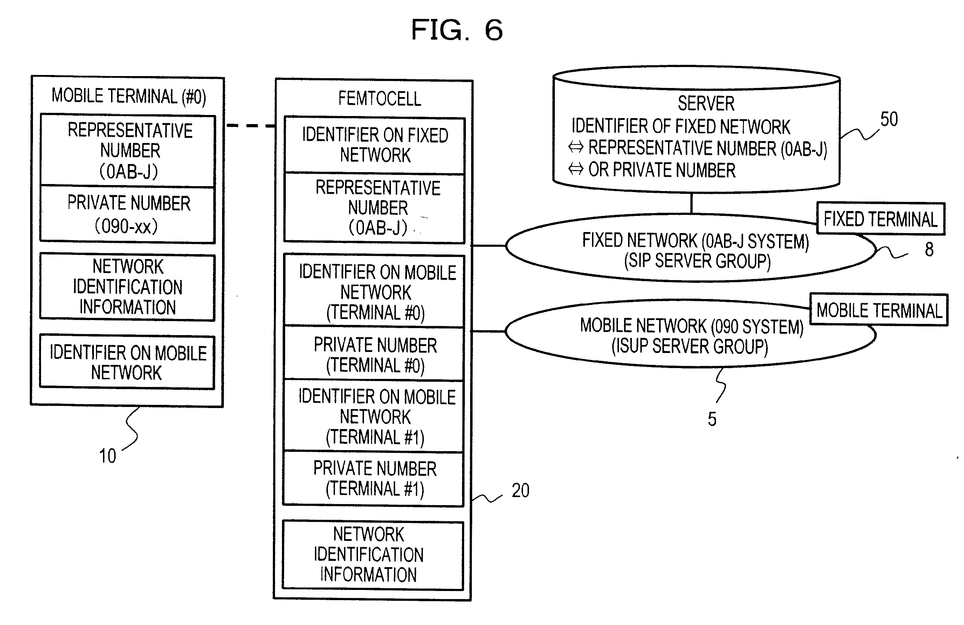

FIG. 6 is a diagram illustrating information that each configuration element stores on the network. As described above, the mobile terminal 10 may store the network identification information in addition to the representative number, the private number, the identifier, such as the IMSI, used for the mobile network. Details and a method of using the network identification information will be described below.

The femtocell 20 stores the number, which is allocated to the femtocell 20 as the number (the 0ABJ number) on the fixed network, as the representative number. As for the mobile terminal 10 that may use the representative number to originate a call, the femtocell 20 stores the private number and the identifier that is used for the mobile network. The number of the mobile terminals 10 that may use the representative number is arbitrary. In the example of FIG. 6, a terminal #0 and a terminal #1 are the mobile terminals 10 that may use the representative number. Thus, the femtocell 20 stores the information about the terminal #0 and the terminal #1. The femtocell 20 further stores the identifier used to identify the femtocell 20 on the fixed network and stores the network identification information. The femtocell 20 uses the network identification information to establish a communication path according to a call originated from the mobile terminal 10 and to perform the connection processing to the destination.

The fixed network 8 is connected to a server 50. The server 50 records an identifier that is used to identify the femtocell 20 and the fixed phone that are connected to the fixed network 8 on the fixed network 8. The identifier used in the fixed network 8 may use a URI or the like. As for the femtocell 20, the server 50 may record the 0ABJ number allocated to the femtocell 20 in association with the URI or the like corresponding to the femtocell 20. As described below, as for the mobile terminal 10 under control of the femtocell 20, if the femtocell 20 obtains the URI corresponding to the private number, the server 50 records the URI in association with the private number. When the message requesting to establish a communication path is transmitted to the fixed network 8 from the femtocell 20, authentication is performed by using the server 50. If the authentication is a success, the communication path is established.

### [d] First Embodiment

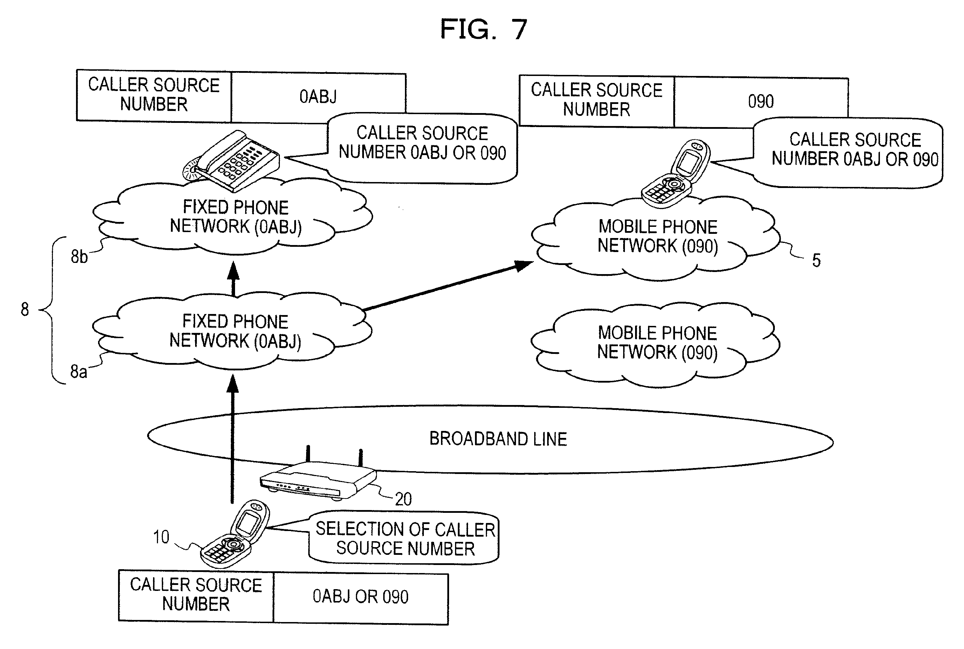

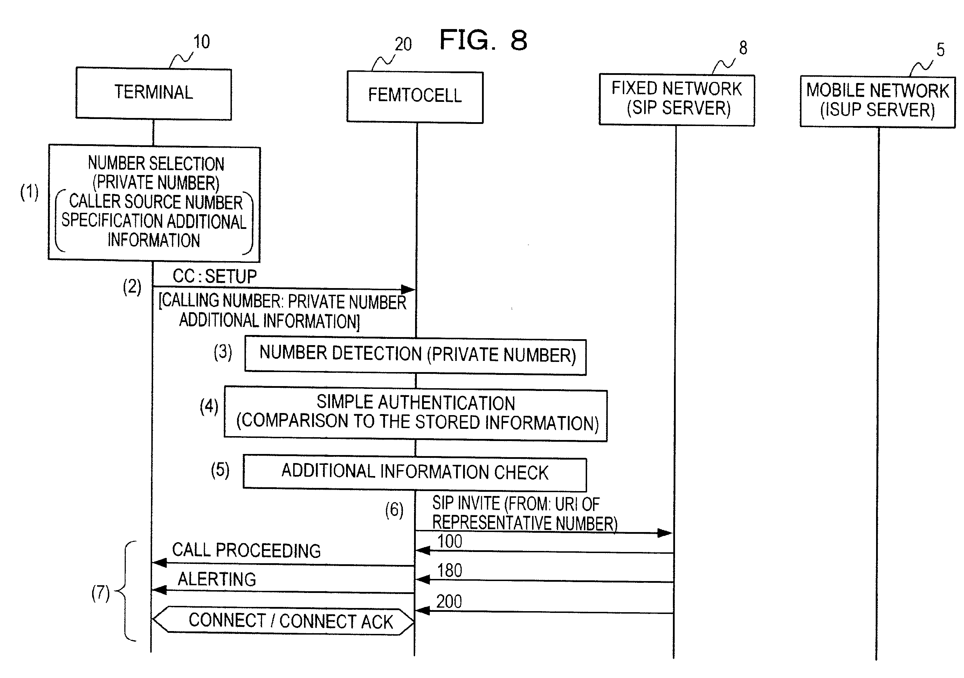

FIG. 7 is a diagram illustrating a call originated from the mobile terminal 10 through the fixed network 8. FIG. 8 is a sequence diagram illustrating an operation of originating a call from the mobile terminal 10. With reference to FIG. 7 and FIG. 8, description will be made of a case where the user of the mobile terminal 10 originates a call through the fixed network 8 (including fixed network components 8a and 8b) . Here, the fixed network 8 is specified as a network that is used preferentially. Description will be made of an embodiment in which the user may omit specification of a network to use. In this case, if the network is not specified, a communication path through the fixed network 8 is established. The following procedure numbers correspond to numbers attached to the operations illustrated in FIG. 8. In the description below, the destination device connected to the mobile network 5 may be referred to as a "destination mobile terminal," and the destination device connected to the fixed network 8 may be referred to as a "destination fixed phone."

### [1] Establishing a Communication Path through a Fixed Network

Description will be made of a case where the mobile terminal 10 originates a call to the destination fixed phone.

(1) When a call is originated from the mobile terminal 10, a phone number to be used as a caller source number is selected. For example, the number selection screen 14 illustrated in FIG. 1 is displayed on the display of the mobile terminal 10. The user uses an input device provided in the mobile terminal 10 to select a number to be used for communication. At this time, the user may select a representative number or a private number by adjusting the number selection 43 to the private number display 42 and by pressing the conversation button 45. Description will be made below of a case where the user selects the private number as a phone number to be used for communication.

(2) When the private number is selected, the mobile terminal 10 transmits a message requesting communication to the femtocell 20. The message requesting communication records an identifier corresponding to the number to be used to originate a call. Here, for example, this message is a SETUP message that includes a calling party BCD number. The private number is written in the number digit area of the calling party BCD number. At this time, the SETUP message is transmitted by using the private number.

(3) When the femtocell 20 receives the SETUP message by using the radio interface unit 21, the radio system protocol processing unit 22 processes the SETUP message. The radio system protocol processing unit 22 detects the information element storing the number used to originate a call and the identifier corresponding to the mobile terminal 10 from the SETUP message and then reports the information element and the identifier to the ISUP signal processing unit 23. For example, the radio system protocol processing unit 22 detects the calling party BCD number and the IMSI of the mobile terminal 10 and then reports the calling party BCD number and the IMSI to the ISUP signal processing unit 23.

(4) The ISUP signal processing unit 23 extracts the number stored in the number digit area of the calling party BCD number and then authenticates whether or not the extracted number is stored in the storage unit 25. The ISUP signal processing unit 23 performs the authentication by comparing the extracted number to the data stored in the storage unit 25 illustrated in FIG. 4 using the IMSI as a key reported from the radio system protocol processing unit 22. In this case, the ISUP signal processing unit 23 detects the private number and compares the detected number to the information stored in the storage unit 25, resulting in a success of the authentication.

(5) If the authentication is a success, the femtocell 20 checks if the SETUP message includes additional information. In this case, description will be made of a case where the SETUP message does not include the additional information. The additional information and the like will be described below.

(6) The femtocell 20 terminates a CC message to be used for radio communication with the mobile terminal 10 and then transmits a message requesting to establish a communication path through the fixed network component 8a to the fixed network component 8b. As the message requesting to establish the communication path, an SIP message may be used. When the ISUP signal processing unit 23 reports the fact that the authentication was a success to the SIP signal processing unit 24, the SIP signal processing unit 24 generates an SIP message.

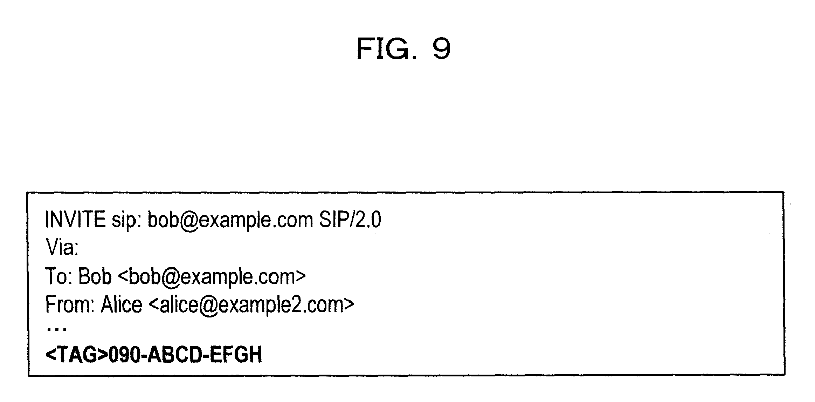

FIG. 9 is a diagram illustrating a first example of the SIP INVITE message. Among the SIP messages, the SIP INVITE message is a message requesting to establish a communication path. The SIP INVITE message records the information that was stored in the SETUP message. For example, the SIP signal processing unit 24 reads out, from the storage unit 25, the URI corresponding to the number that is stored in the calling party BCD of the SETUP message received from the mobile terminal 10. Any method for recording a URI may be used. For example, as illustrated in FIG. 9, the URI may be stored as "sip:bob@example.com" and may be stored as "tel: +81-1-2345-6789" in decimal numbers.

Referring to FIG. 8, the femtocell 20 transmits the message to the fixed network 8 to establish a communication path for communication using the private number through the fixed network 8. In the fixed network 8, the authentication by the identifier used in the fixed network 8 is performed. For a success of the authentication, the SIP signal processing unit 24 describes the identifier, which is to be used in the fixed network 8, in the message. The private number is a number corresponding to the mobile network 5. Accordingly, as the identifier to be used in the fixed network 8, the SIP signal processing unit 24 selects the URI of the representative number as a URI that is to be described in the message requesting to establish a communication path, for example, rather than selecting the URI of the private number.

(7) When receiving the SIP INVITE message, the fixed network 8 checks correspondence between the URI information and the phone number that are stored in the server 50. If the representative number and the URI are registered in the server 50 in advance, the authentication is a success and processing such as transmitting the SIP INVITE message to the destination through the fixed network 8 to establish a communication path through the fixed network 8 to the destination fixed phone is performed. In the example of FIG. 8, the SIP 100, 180 and 200 responses and the other illustrated messages and acknowledgments are thereby generated as the communication path is established.

The above-described method makes it possible to establish a communication path through the fixed network 8 by using the private number corresponding to the mobile network 5. Therefore, it is possible to prevent deterioration of the communication quality that may occur when the mobile network 5 is used.

In the above-described procedure, even though the private number is used to perform communication, the private number is not reported as the caller source number. Accordingly, the above-described procedure is effective when a reception of SOHO is one representative number or when the private number is undesired to be reported to the destination device because of security problems.

### [2] Notification of a Caller Source Number

In the above-described procedure, description was made of a case where the private number is not reported. However, depending on a usage state of the user, the private number may be desired to be reported to the destination device. Description will be made of a method for reporting the phone number, which is not used to establish a communication path, as the caller source number.

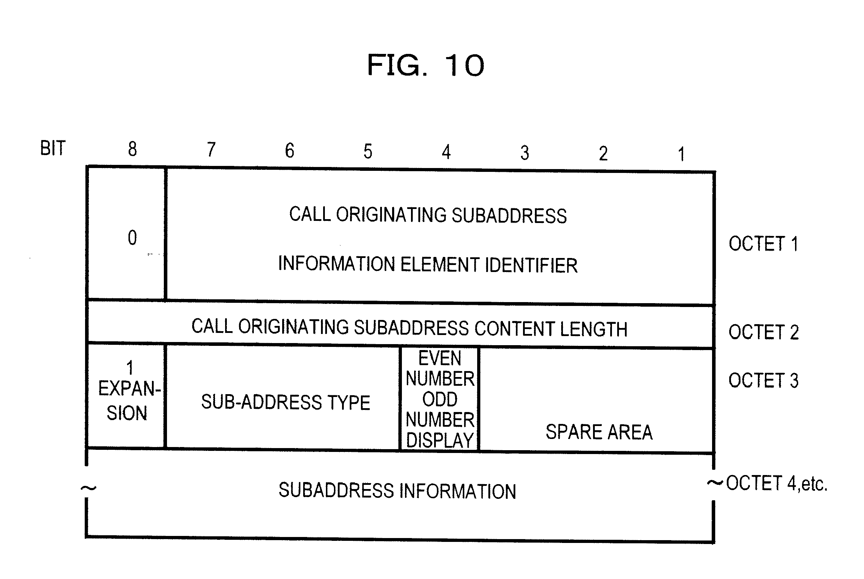

In the above-described procedure (2) associated with FIG. 8, when the phone number, which is not used to establish a communication path, is reported as the caller source number, the mobile terminal 10 transmits a message added with the additional information to the femtocell 20. The additional information may be specified by, for example, the calling party subaddress included in the SETUP message. FIG. 10 is a diagram illustrating information elements of the calling party subaddress. The phone number reported as the caller source number of the mobile terminal 10 may be stored in, for example, subaddress information in the calling party subaddress illustrated in FIG. 10. The calling party subaddress includes a spare area in addition to the information elements such as a call originating subaddress information element identifier, a subaddress type, and the like. The spare area may store the information that is used for the call control by the signal processing function 32.

If the SETUP message that includes the additional information is transmitted from the mobile terminal 10, the femtocell 20 describes a URI corresponding to the private number in the SIP INVITE message according to specification of the calling party subaddress. The following two methods are used as a method for describing a SIP INVITE message.

In a first method, the mobile terminal 10 reports the private number by the information element of the SIP INVITE message. For example, if the mobile terminal 10 sets a rule for recording the private number in tag information of the SIP INVITE message, the private number may be reported as the tag information as illustrated in FIG. 9. Therefore, the destination device may obtain the private number from the tag information and may use the private number for an operation such as displaying the caller source number.

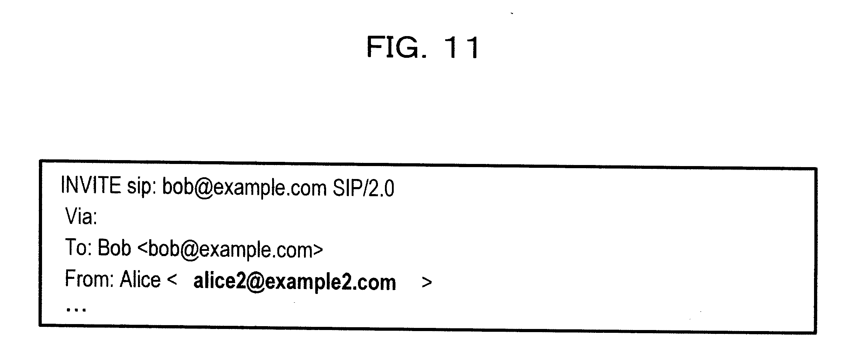

As a second method, there is the URI corresponding to the private number, the mobile terminal 10 may report the URI to the destination device by the SIP message. In this case, the femtocell 20 obtains and records the URI corresponding to the private number in the server 50 in advance. This enables the femtocell 20 to specify the obtained URI corresponding to the private number in a "From" column of the SIP message in the procedure (6) associated with FIG. 8. FIG. 11 is an example of the SIP INVITE message that may report the private number. At this time, the number, which is stored in the "From" column in advance in the destination device, may be set as the caller source number. Alternatively, any method may be used to report the fact that the caller source number is stored in the "From" column. The destination device that received the SIP INVITE message illustrated in FIG. 11 may identify the private number corresponding to the URI "alice2@example2.com" as the caller source number. The mobile terminal 10 may report the URI of the private number as the tag information.

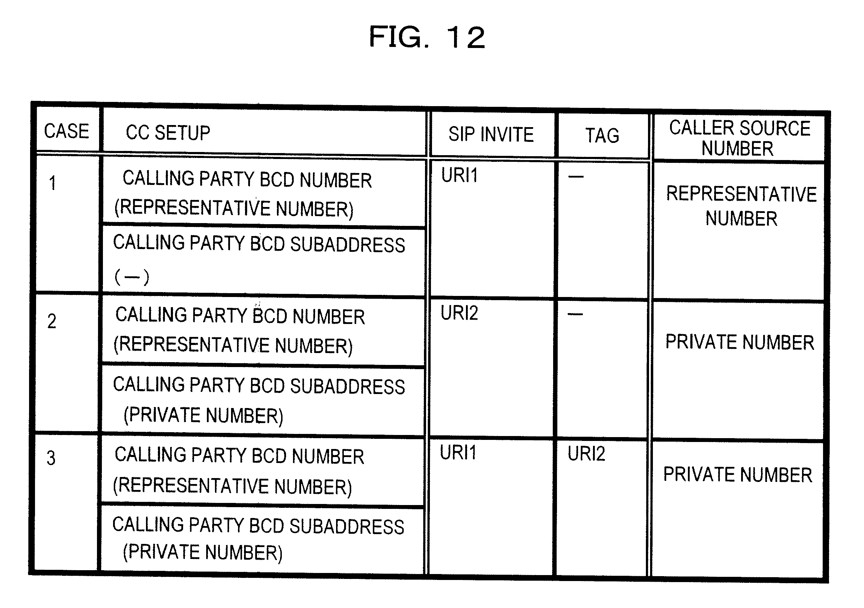

FIG. 12 is a diagram illustrating a setting example of correspondence between the record contents of the messages and the caller source numbers to be reported. Case 1 illustrates a case where the additional information is not added as explained in the description of establishing a communication path. Since the additional information is not added, the representative number is reported by the calling party BCD number. Thus, a URI 1 corresponding to the representative number is described in the SIP INVITE message, and the destination device identifies the representative number as the caller source number.

In Case 2 and Case 3, since the femtocell 20 identifies the additional information, the private number is reported as the caller source number. In Case 2, the representative number is reported by the calling party BCD number, and the private number is specified as the caller source number by the calling party subaddress. When the femtocell 20 detects the additional information, the femtocell 20 describes a URI 2 corresponding to the private number in the SIP INVITE message to report the private number as the caller source number. In Case 3, the femtocell 20 that detected the additional information in the same manner as in Case 2 reports the URI of the private number that is obtained in advance as the tag information. The SIP INVITE message includes the URI 1 of the representative number. However, the private number corresponding to the tag information is used as the caller source number in the destination device.

The mobile terminal 10 may report the representative number as the caller source number by using the additional information. For example, the additional information may indicate an instruction indicating that the caller source number is a fixed number. In this case, based on the additional information added to the calling party subaddress, the mobile terminal 10 generates an SIP INVITE message in which the caller source number is the representative number.

Furthermore, even if the number used for communication from the mobile terminal 10 is the representative number (the 0ABJ number), it is possible to establish a communication path to the destination device through the femtocell 20 and the fixed network 8.

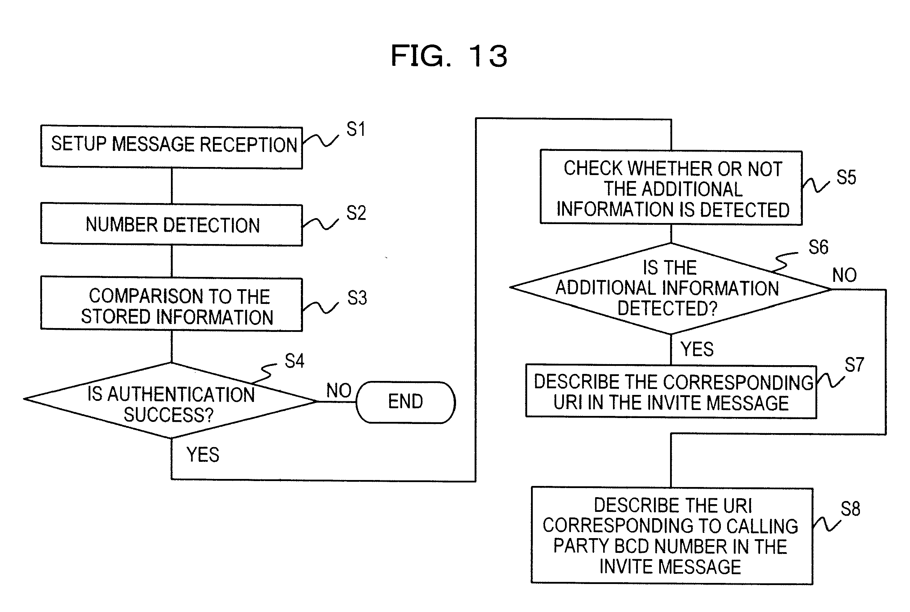

FIG. 13 is a flowchart illustrating an operation performed by the femtocell 20 when the mobile terminal 10 originates a call. FIG. 13 is a diagram illustrating an example of an operation of the femtocell 20 when the SETUP message is reported to the femtocell 20 from the mobile terminal 10 by using the representative number. When receiving the SETUP message from the mobile terminal 10, the femtocell 20 extracts the number included in the SETUP message (Step S1 and Step S2) . The extracted phone number is a phone number used to originate a call. If the authentication of the extracted phone number and the information stored in the storage unit 25 is a success, the femtocell 20 checks whether or not the additional information is present (Step S3 to Step S6). If the additional information is present, the femtocell 20 generates an SIP INVITE message according to the additional information (Step S7). If the additional information is not present, the femtocell 20 describes the URI corresponding to the number reported by the calling party BCD number in the SIP INVITE message (Step S8). As described above, in the case of originating a call by the private number when the fixed network 8 is used preferentially, the URI of the representative number is described in the SIP INVITE message.

In the above-described embodiment, even if the private number corresponding to the mobile network 5 is used, the communication quality may be improved by establishing a communication path through the fixed network 8. Description has been made of establishing a communication path from the mobile terminal 10 to the destination fixed phone. However, the destination device may be a mobile terminal. In this case, as illustrated in FIG. 7, the communication path is established to the destination mobile terminal from the mobile terminal 10 by being connected to the mobile network 5 through the femtocell 20 and a fixed network 8.

### [e] Second Embodiment

Even though the fixed network 8 is used preferentially in the first embodiment, the user may alternately select a network to be used to establish a communication path.

### [1] Configuration of a Mobile Terminal that May Select a Network

The mobile terminal used in the second embodiment has a function for the user to select a network.

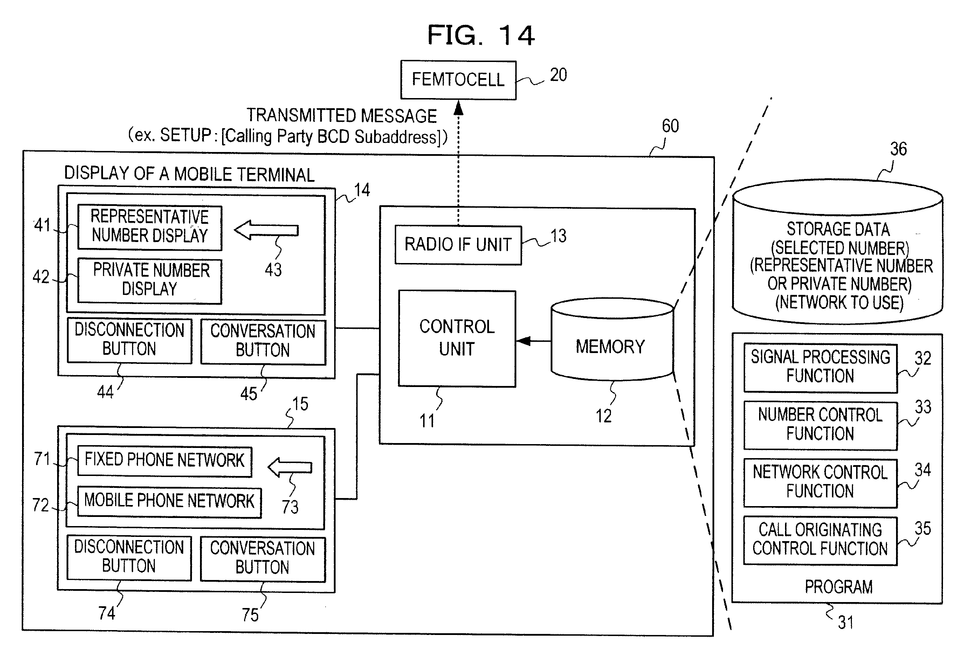

FIG. 14 is a diagram illustrating an example of a configuration of a mobile terminal 60 that may select a network. The mobile terminal 60 includes a control unit 11, a memory 12, and a radio interface unit 13 and displays a network selection screen 15 on a display. The configurations of the control unit 11, the memory 12, the radio interface unit 13, and the number selection screen 14 can be the same as those of the mobile terminal 10 and are described above. As with the mobile terminal 10, the signal processing function 32, the number control function 33, the network control function 34, and the call originating control function 35 are performed by reading the program 31 by the control unit 11. The functions can also be the same as those of the mobile terminal 10.

The number selection screen 14 and the network selection screen 15 may be displayed on the display at the same time. Alternately or additionally, only one of the number selection screen 14 and the network selection screen 15 may be displayed on the display at any given time. The display on which the number selection screen 14 is displayed and the display on which the network selection screen 15 is displayed may be the same or may be different.

By the network control function 34, the network selection screen 15 is displayed by using the storage data 36. The network selection screen 15 includes a fixed phone network display 71, a mobile phone network display 72, a network selection 73, a disconnection button 74, and a conversation button 75. In this example, the mobile terminal 60 may be connected to two types of networks: the fixed phone network, and the mobile phone network. On the network selection screen 15, if the user selects the disconnection button 74, the control unit 11 identifies that the network selection is not performed. If the network selection is not performed, the communication may be stopped. For example, as illustrated in the first embodiment, the specified network may be used.

In a state where the network selection 73 selects either the fixed phone network or the mobile phone network according to input from the user, if the user selects the conversation button 75, the network selected by the network selection 73 is identified by the network control function 34.

If the network to be used for communication is identified, the control unit 11 may temporarily store, as the storage data 36, network identification information about the selected network. In the present specification, the identifier used to identify the selected network may be described as "communication network information". The communication network information is used for processes using the number control function 33, the network control function 34, and the call originating control function 35. The communication path is established through the selected network.

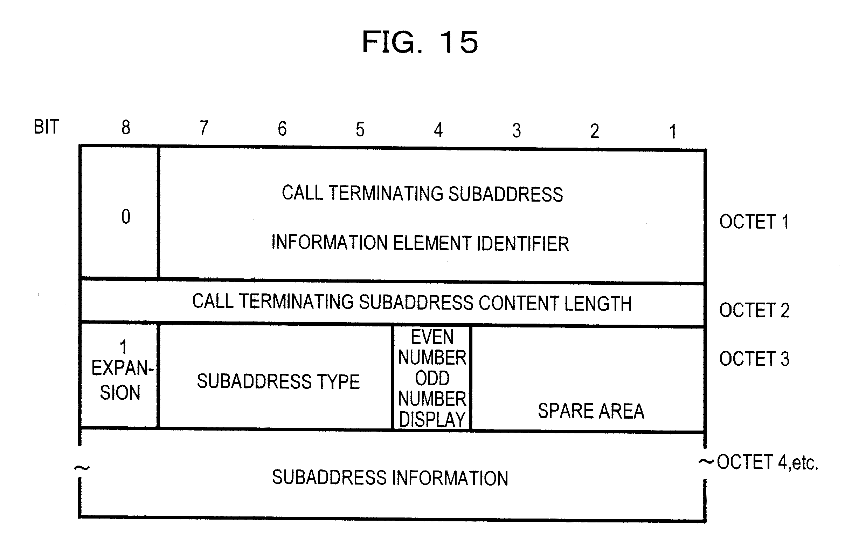

When the control unit 11 identifies the network used for communication and then the mobile terminal 60 makes a call, the mobile terminal 60 transmits a message requesting communication from the radio interface unit 13 to the femtocell 20. This message includes communication network information and other information. For example, the mobile terminal 60 transmits a SETUP message as a message requesting communication to report the communication network information to the femtocell 20 by using the called party subaddress. FIG. 15 is a diagram illustrating information elements of the called party subaddress. The called party subaddress is used to identify a subaddress on an incoming call side and includes subaddress type information and subaddress information. The called party subaddress also includes a spare area. For example, as for the information to be stored in the spare area, if a rule that is used between the mobile terminal 60 and the femtocell 20 is defined in advance, the communication network information may be reported to femtocell 20 from the mobile terminal 60 by using the spare area.

### [2] Establishing a Communication Path through the Selected Network

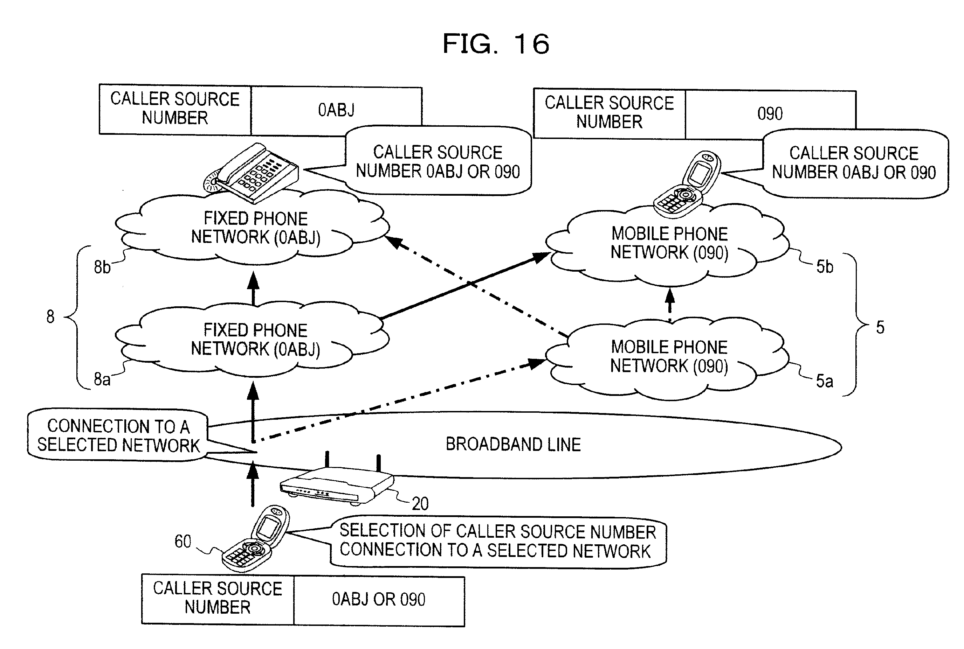

FIG. 16 is a diagram illustrating a call originated from the mobile terminal 60 through the selected network. When the fixed network 8 is specified by the mobile terminal 60, the communication path through the fixed network 8a is established along the solid lines of FIG. 16. If the destination is a fixed phone, a communication path through the fixed network components 8a and 8b is established. If the destination is a mobile terminal, a communication path through the fixed network component 8a and a mobile network component 5b is established. On the other hand, if the mobile network 5 is selected, the femtocell 20 is connected to the mobile network component 5a. If the destination is a fixed phone, a communication path through the fixed network component 8b from the mobile network component 5a is established. A communication path to the mobile terminal may be established through the mobile network components 5a and 5b.

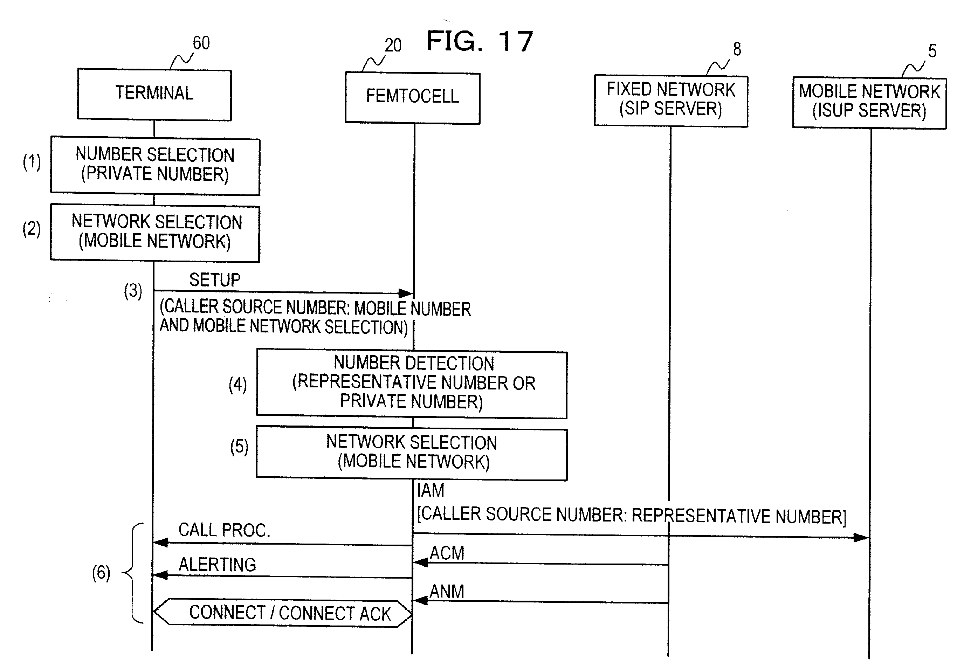

FIG. 17 is a sequence diagram illustrating an operation that is performed when a call is originated through the selected network. With reference to FIG. 16 and FIG. 17, description as an example will be made of establishing a communication path in a case where the mobile network 5 is specified from the mobile terminal 60 by using the private number.

(1) When a call is originated from the mobile terminal 60, a phone number to be used for communication is selected. The selection of the phone number used for communication has the same procedure as in the procedure (1) described with reference to FIG. 8 in the first embodiment. In this case, the private number is selected.

(2) When the phone number to be used is selected, a network to be used for a communication path is selected. The network selection is performed by using the network selection screen 15. The mobile phone network is selected by pressing the conversation button 75 by the user to adjust the network selection 73 to the mobile phone network 72.

(3) After the phone number and the network used for communication are selected, the mobile terminal 60 transmits a message such as a SETUP message requesting communication to the femtocell 20 to report the phone number and the communication network information used for communication. In this example, the mobile terminal 60 transmits the SETUP message that includes the called party subaddress in which the communication network information is stored in the spare area and includes the calling party BCD number in which the private number is written in the number digit area.

(4) When the femtocell 20 receives the SETUP message from the radio interface unit 21, the radio system protocol processing unit 22 extracts the caller source number, the identifier of the mobile terminal 60, and the like from the message. At this time, the radio system protocol processing unit 22 detects and reports the calling party BCD number, the called party subaddress, and the IMSI of the mobile terminal 10 to the ISUP signal processing unit 23. First, the ISUP signal processing unit 23 reads out the number to be used for communication from the calling party BCD number and performs authentication. The authentication and the extraction of the number can be the same as in the procedure (4) described with reference to FIG. 8.

(5) If the authentication is a success, the ISUP signal processing unit 23 reads out the information written in the spare area of the called party subaddress and detects the network that is selected by the mobile terminal 60. To detect a network, the ISUP signal processing unit 23 uses the communication network information and refers to the network identification information stored in the storage unit 25.

(6) The femtocell 20 terminates the CC message that is used for radio communication with the mobile terminal 60 and transmits a message requesting to establish a communication path through the mobile network 5. This message may be, for example, an IAM message. After that, the femtocell 20 terminates both the CC message and the ISUP message illustrated in FIG. 17 and establishes a communication path.

As described in the first embodiment, the phone number used for communication may be or may not be the same as the phone number to be reported as the caller source number. In the example of FIG. 17, even though the private number is used for communication, the representative number is reported by the IAM message as the caller source number.

### [3] An Example of Restriction of a Combination of the Phone Number and the Network

Description has been made of a case where a combination of the phone number and the network that can be used to establish a communication path is arbitrary. However, depending on mounting, it is possible to restrict the combination of the phone number and the network that can be used to establish a communication path.

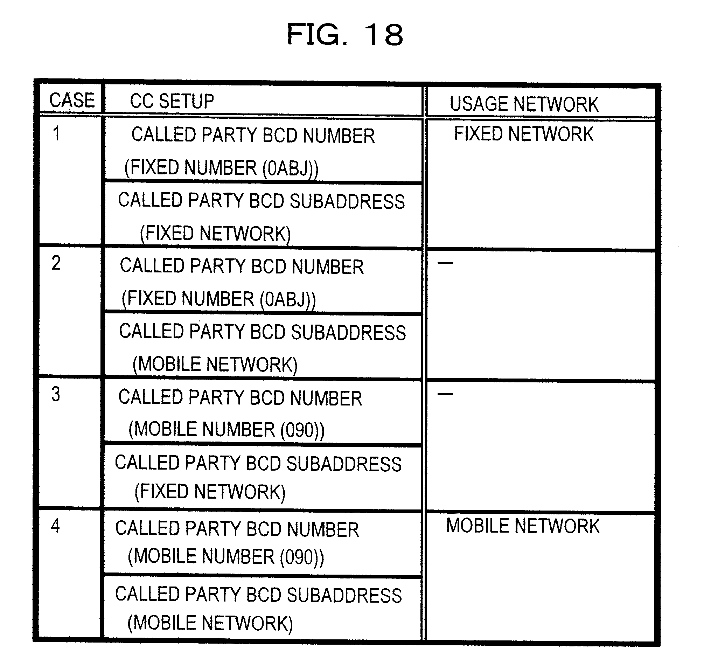

FIG. 18 is a diagram illustrating an example of selection logic of the network that is used to establish a communication path. For example, the storage unit 25 may store choices illustrated in FIG. 18. In this case, when recognizing a content of the SETUP message, the ISUP signal processing unit 23 checks the storage unit 25 to see if the combination can be used to establish a communication path. In the example of FIG. 18, by using the phone number of the destination stored in the called party BCD number and the information of the called party subaddress stored in the SETUP message, the ISUP signal processing unit 23 determines whether or not a communication path can be established. The information elements of the called party BCD number will be described below. For condition setting of the combination of the phone number and the network that may be used to establish a communication path, other information may alternately or additionally be used.

In the condition illustrated in FIG. 18, the femtocell 20 permits establishing of a communication path in a case where communication through the fixed network 8 is performed on the 0ABJ number and in a case where communication through the mobile network 5 is performed on the number starting with 090 on the mobile network. However, as illustrated in Case 2 of FIG. 18, if a communication path through the mobile network 5 to the 0ABJ number is requested to be established, the setting is assumed to be inappropriate. The setting may reject the establishing of the communication path. In the same manner, as illustrated in Case 3, even when the communication path through the fixed network 8 to the number on the mobile network is requested to be established, the setting allows the femtocell 20 to reject the establishing of the communication path.

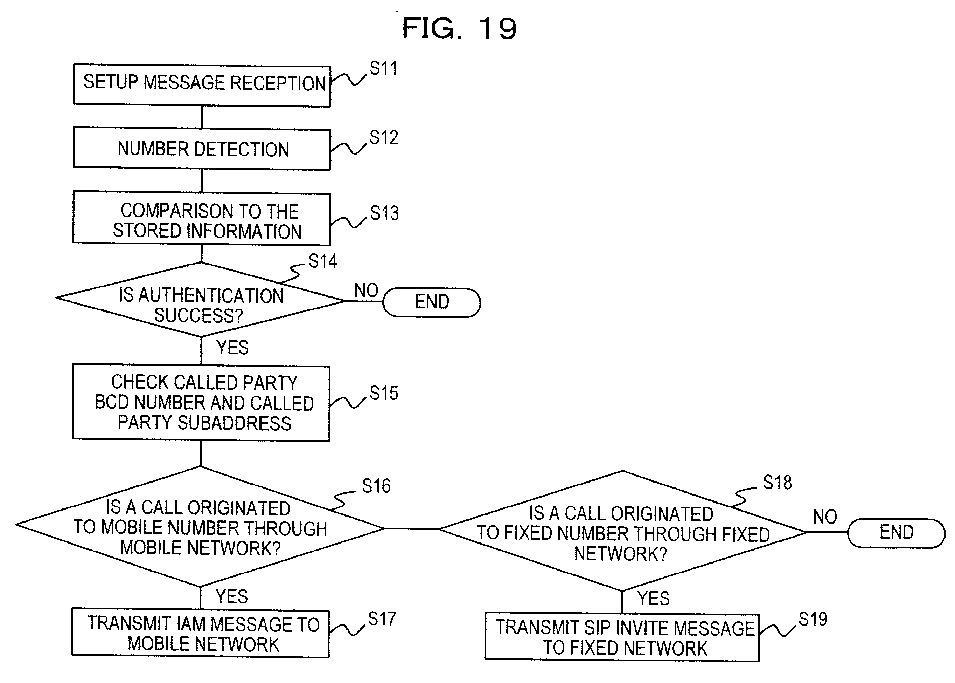

FIG. 19 is a flowchart illustrating an example of an operation of the femtocell 20. The femtocell 20 performing the operation illustrated in FIG. 19 establishes a communication path according to the restriction illustrated in FIG. 18. When receiving the SETUP message from the mobile terminal 60, the femtocell 20 extracts the phone number included in the SETUP message (step S11 and step S12). The extracted phone number is used to originate a call. If the authentication between the extracted phone number and the information stored in the storage unit 25 is a success, the femtocell 20 checks the called party BCD number and the called party subaddress (step S13 to Step S15).

Next, the femtocell 20 checks whether or not the SETUP message requests a call originated to the mobile number such as the 090 number through the mobile network 5 (Step S16). If the SETUP message requests to establish a communication path through the mobile network 5 to the mobile number, the femtocell 20 transmits the IAM message to the mobile network 5 (Step S17).

On the other hand, if the SETUP message does not request to establish a communication path through the mobile network 5 to the mobile number, the femtocell 20 checks whether or not the SETUP message requests to establish a communication path through the fixed network 8 to the fixed number (Step S18). If the SETUP message requests to establish a communication path through the fixed network 8 to the fixed number, the femtocell 20 transmits an appropriate SIP INVITE message to the fixed network 8 (Step S19). In other cases, the communication path is not established. If the authentication fails in Step S14 or if the communication path is not established, the femtocell 20 may transmit an error message to the mobile terminal 60.

By using the database illustrated in FIG. 18, it is possible to restrict the combination of the phone number and the network that can be used to establish a communication path to the number used for communication by the user or to the correspondence with the number reported to the destination. In this case, the network may be selected without using the network selection screen 15. Thus, the network selection may be performed automatically by the mobile terminal 60.

### [f] Third Embodiment

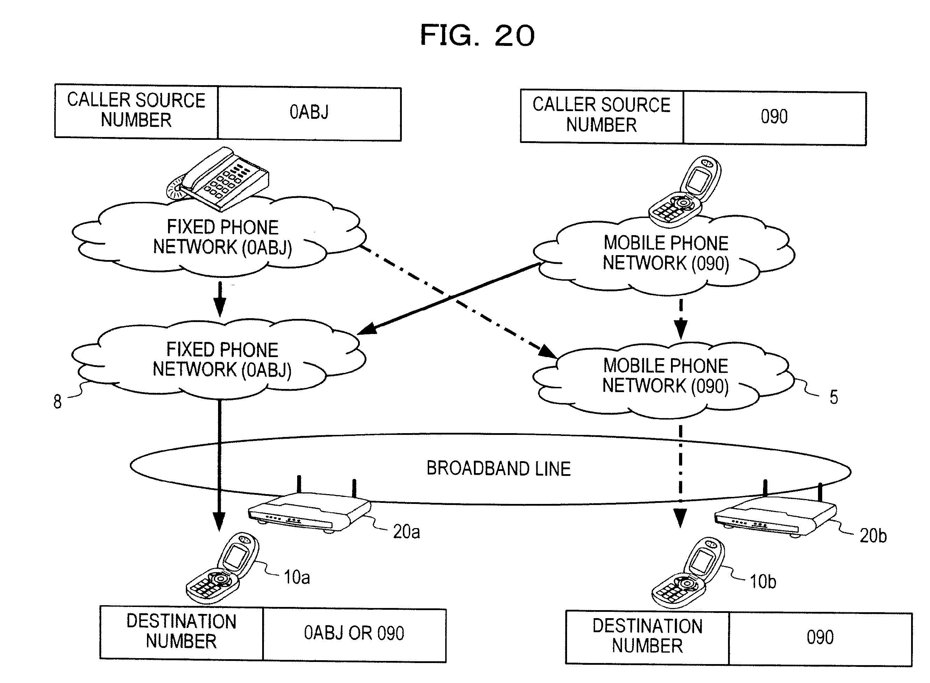

Next, description will be made of an incoming call to the mobile terminal 10 or the mobile terminal 60. FIG. 20 is a diagram illustrating a communication path to a mobile terminal from a caller source device. Description will be made below of a case where an incoming call is originated to the mobile terminal 10 as a destination. In the same manner, an incoming call is originated even when the terminal as a destination is the mobile terminal 60. There may be two incoming calls to the mobile terminal 10. One is from the mobile network 5. The other is from the fixed network 8. As for the incoming call from the mobile network 5, a communication path is established through a femtocell 20b from the mobile network 5 as illustrated with the incoming call to a mobile terminal 10b indicated with a chain line in FIG. 20. As for the incoming call from the fixed network 8, as illustrated with the incoming call to a mobile terminal 10a indicated with a solid line, the communication path is established through a femtocell 20a from the fixed network 8. When the combination of the phone number and the network is not restricted in a call originating side, the incoming call through either the mobile network 5 or the fixed network 8 may be an incoming call to the representative number or an incoming call to the private number even when the communication is performed through either network. Here, operations of the femtocell 20 and the mobile terminal 10 are described with respect to a case where an incoming call to the representative number is requested and a case where an incoming call to the private number is requested.

### [1] An Incoming Call to the Representative Number

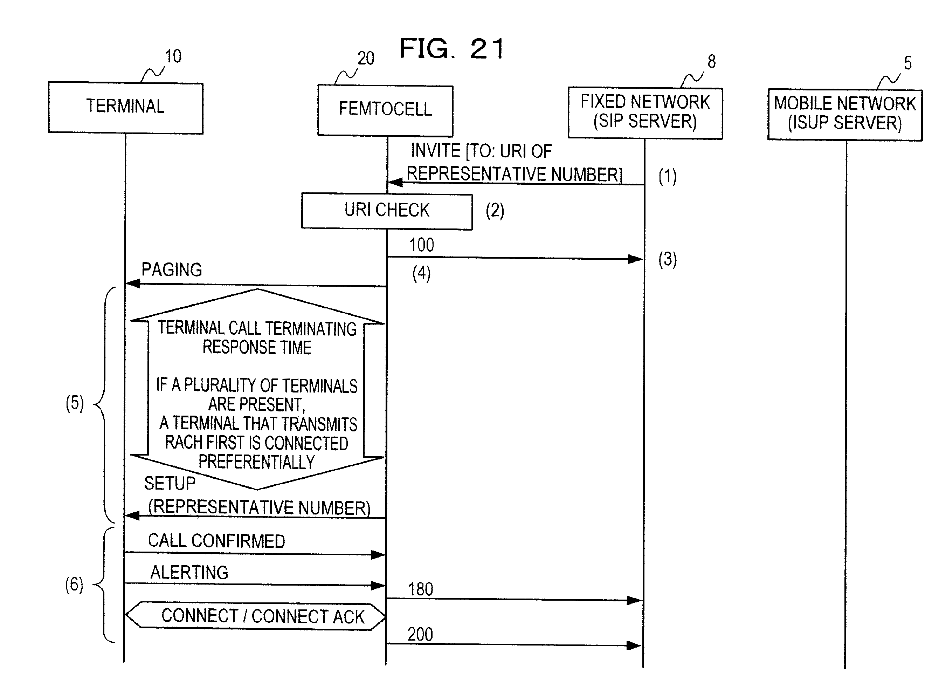

FIG. 21 is a sequence diagram illustrating an operation performed when an incoming call is requested from the fixed network 8 to the representative number.

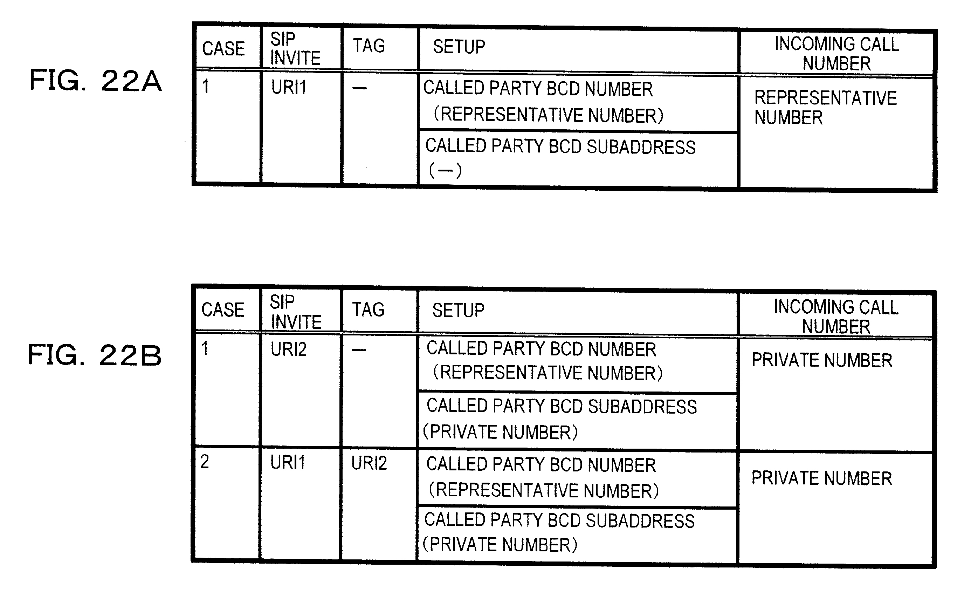

(1) From the fixed network 8 to the femtocell 20, an INVITE message requesting an incoming call to the representative number is transmitted. FIG. 22A and FIG. 22B are diagrams illustrating an example of correspondence between the contents of the INVITE messages and the incoming call numbers.

(2) Referring to FIG. 21, the INVITE message is input in the SIP signal processing unit 24 through the wired interface unit 26 of the femtocell 20, and then processing such as checking the URI or the like is performed. The SIP signal processing unit 24 checks the URI and the tag information that are described in the received INVITE message and identifies the communication request with respect to the representative number or the private number by using the information stored in the storage unit 25. If the correspondence between the contents of the INVITE messages and the incoming call numbers is stored in the storage unit 25 in advance as illustrated in FIGs.22A and 22B, the SIP signal processing unit 24 identifies the number of the destination by the stored information.

As illustrated in FIG. 22A, the URI 1 is described in the SIP INVITE message, and the SIP INVITE message has no description for the tag information. In this case, the SIP signal processing unit 24 determines that an incoming call is originated to the representative number.

(3) Referring to FIG. 21, when the femtocell 20 checks that the incoming call is originated by the representative number, the femtocell 20 responds to the incoming call with respect the fixed network by the representative number (call originating 100).At this time, the SIP signal processing unit 24 reports the fact that the incoming call is originated to the representative number to the ISUP signal processing unit 23.

(4) The ISUP signal processing unit 23 is reported that the incoming call is originated to the representative number, the ISUP signal processing unit 23 extracts the mobile terminal 10 that is stored in association with the URI of the representative number and requests the radio system protocol processing unit 22 to perform the incoming call processing with respect to the extracted mobile terminal 10.

The radio protocol processing unit 22 generates and sends a paging signal to the mobile terminal 10 that is requested to perform the incoming call processing. That is, the femtocell 20 performs calling processing of the mobile terminal that is specified by the destination number. Here, since the incoming call is originated to the representative number, all of the mobile terminals 10 are specified. Thus, the femtocell 20 transmits a paging signal to all of the mobile terminals 10.

(5) The mobile terminal 10 responds to the paging signal by transmitting a signal to the femtocell 20 through a Random Access Channel (RACH). Here, the mobile terminal 10 transmits the signal that includes an identifier identifying the mobile terminal 10 itself to the femtocell 20.

When the paging signal is transmitted to a plurality of terminals, the femtocell 20 establishes a radio communication path between the femtocell 20 and the mobile terminal 10 that responds first, and transmits the SETUP message to the mobile terminal 10 that established the communication path. The femtocell 20 identifies the identifier with respect to the mobile terminal 10 that responds in the second or later place. This may prevent the establishment of the communication path between the plurality of mobile terminals 10 and the caller source device with respect to one incoming call.

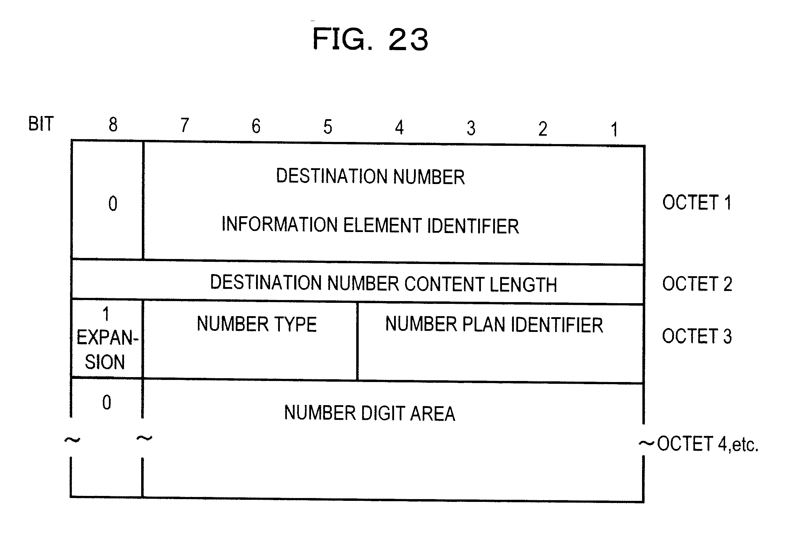

The information used to identify the number for requesting communication is described in the SETUP message that is transmitted from the femtocell 20. For example, as illustrated in FIG. 22A, the femtocell 20 specifies the representative number by the called party BCD number, and does not specify the number by the called party subaddress. FIG. 23 is a diagram illustrating information elements of the called party BCD number. The called party BCD number includes the number digit area in addition to information indicating a destination number information element identifier and a number classification, and stores the information in this area to generate a SETUP message.

(6) Referring to FIG. 21, when transmitting the SETUP message, the femtocell 20 establishes a communication path to the mobile terminal 10 by performing call terminating signal procedure with the mobile terminal 10 and by performing signal procedure with the fixed network.

The femtocell 20 may recognize whether or not the phone number of the destination is the representative number by checking the URI depending on a rule related to the INVITE message that is transmitted from the femtocell 20. In this case, in the procedure (2), the femtocell 20 may recognize the destination by checking the URI and then may omit checking of the tag information.

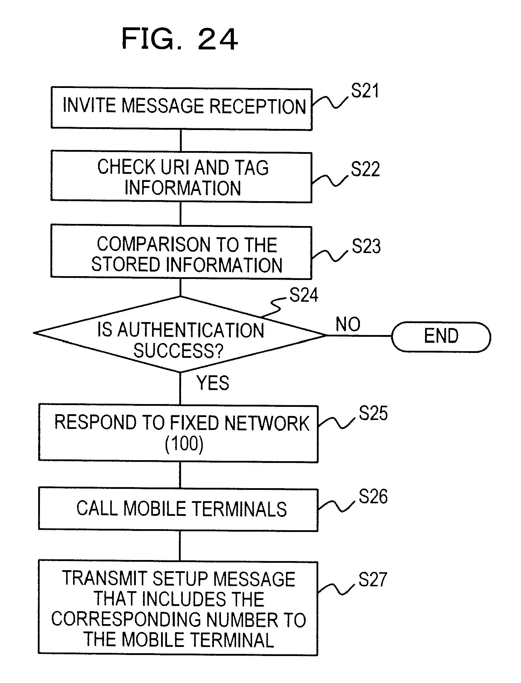

FIG. 24 is a flowchart illustrating an operation of the femtocell 20 when an incoming call to the representative number is requested. When the femtocell 20 receives the INVITE message, the SIP signal processing unit 24 checks the URI and the tag information and performs authentication with the information stored in the storage unit 25 (Step S21 to Step S23). The femtocell 20 ends the communication if the authentication fails (Step S24). If the authentication with the respective number is a success, the femtocell 20 responds to the fixed network 8 (Step S25) . The radio system protocol processing unit 22 of the femtocell 20 transmits a paging signal to the mobile terminal 10 and calls all of the mobile terminals 10 that can communicate with the representative number (Step S26) . If any of the called mobile terminals 10 responds to the signal, the femtocell 20 establishes a radio communication path between the femtocell 20 and the mobile terminal that responds first, and the femtocell 20 transmits the SETUP message in which the representative number is described (Step S27). As described above, by using the URI, if the femtocell 20 can check whether the incoming call is originated to the representative number, the femtocell 20 checks the URI in Step S22 and omits the check of the tag information.

In the above-described embodiment, the incoming call to the representative number may be used as the incoming call to call all the mobile terminals 10 located in the communication area of the femtocell 20. Therefore, when the mobile terminal 10 is used for voice conversation, the incoming call can be originated to the representative number.

### [2] An Incoming Call to a Specified Mobile Terminal

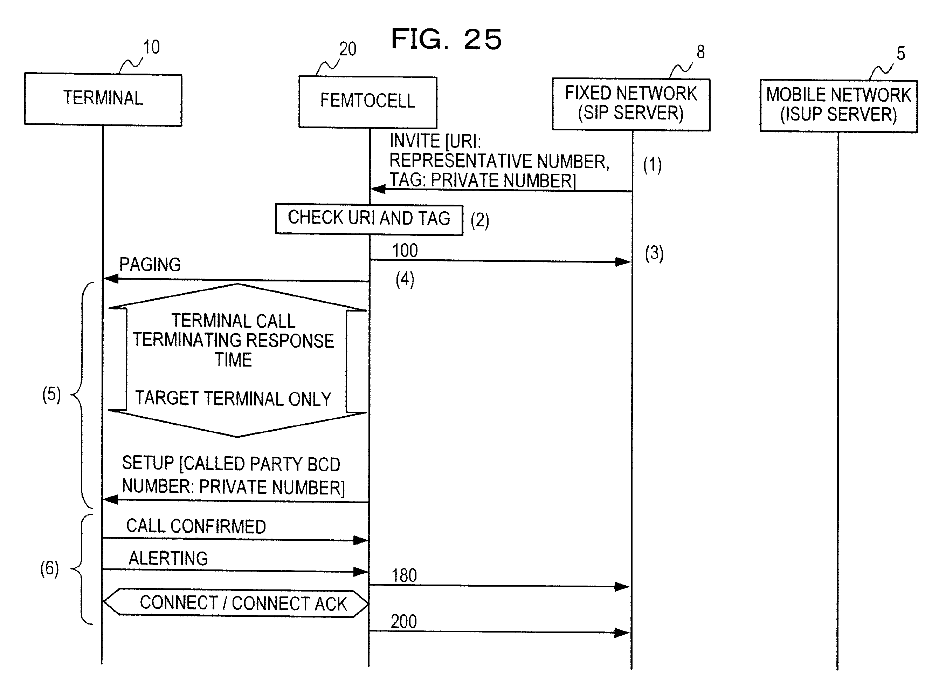

Next, description will be made of a case where an incoming call is requested to a specified mobile terminal 10 from the fixed network 8. FIG. 25 is a sequence diagram illustrating an operation performed when an incoming call is requested to the specified mobile terminal 10 from the fixed network 8.

(1) The INVITE message requesting an incoming call to the specified mobile terminal 10 is transmitted from the fixed network 8 to the femtocell 20. In FIG. 22B is a diagram illustrating an example of the correspondence between the content of the INVITE messages and the incoming call numbers when the specific mobile terminal is specified by the private number. As with Case 1, the private number is transmitted by recording the URI 2 corresponding to the private number in the SIP INVITE message. Furthermore, as described in the first embodiment, the private number may be transmitted by using the tag information. Description will be made below of a case where the private number is specified by the method of Case 2, for example.

(2) The INVITE message is input to the SIP signal processing unit 24 through the wired interface unit 26, and processing such as checking of the URI and the like are performed. The SIP signal processing unit 24 identifies the incoming call to the private number by checking the URI and the tag information that are described in the received INVITE message. As described above, if the correspondence between the content of the INVITE messages and the incoming call numbers are stored in a database, the ISUP signal processing unit 23 identifies the number of the destination based on the information.

Description will be made of a case where the URI 1 is stored in the SIP INVITE message, the URI 2 is stored in the tag information, and the SIP signal processing unit 24 determines that the incoming call is originated to the private number.

(3) After determining that the incoming call is originated to the private number, the femtocell 20 responds to the fixed network (call originating 100). The SIP signal processing unit 24 reports that the incoming call is originated to the private number to the ISUP signal processing unit 23.

(4) When the ISUP signal processing unit 23 is reported that the incoming call is originated to the private number, the ISUP signal processing unit 23 extracts, from the data in the memory, the IMSI of the mobile terminal 10 that is requested for a conversation by using the URI and the tag information included in the SIP INVITE message. After extracting the IMSI, the ISUP signal processing unit 23 reports the extracted IMSI to the radio protocol processing unit 22 and requests the incoming call processing to the mobile terminal 10 to which an incoming call is requested. The radio protocol processing unit 22 generates and transmits a paging signal to the mobile terminal 10 to which the incoming call processing is requested.

(5) If the mobile terminal 10 to which the incoming call processing is requested responds, the femtocell 20 establishes a radio communication path between the femtocell 20 and the responded mobile terminal 10 and transmits a SETUP message. As illustrated in FIG. 22B, the SETUP message may specify the representative number by the called party BCD number and may specify the private number by the called party subaddress. To record each number, the above-described method is used.

(6) After transmitting the SETUP message, the femtocell 20 establishes a communication path to the mobile terminal and to the fixed network by performing incoming call signal procedure with the mobile terminal 10 and performing signal procedure with the fixed network.

Although FIG. 24 has been described as a flowchart illustrating an operation of a femtocell 20 when an incoming call to the representative number is requested, the flowchart of FIG. 24 also illustrates an operation performed by the femtocell 20 when the incoming call is originated to the specified mobile terminal 10 by using the private number. In this example, when the incoming call is originated to the specified mobile terminal 10, the mobile terminal 10 that is called in Step S26 is the mobile terminal 10 to which the incoming call is requested.

The femtocell 20 may request an incoming call to the specified mobile terminal 10 without using the private number. For example, specific information used to individually recognize the femtocell 20 and the mobile terminal 10 that is communicable is set in advance, and the specific information is shared by the mobile terminal 10, the femtocell 20, the caller source device, and the like. When the caller source device requests communication with the 0ABJ number as the number of the destination, the caller source device specifies the mobile terminal 10 corresponding to the specific information to request an incoming call by adding the specific information used to specify the mobile terminal 10 to the SETUP message. The femtocell 20 identifies the mobile terminal 10 to which the incoming call is requested from the specific information included in the SETUP message, and performs the incoming call processing to the mobile terminal 10. To allow the user to easily specify the mobile terminal 10, in the caller source device, the specific information may be related to the input information from an input interface. For example, the specific information may be related to the input information in such a way that if the user inputs "#" after the representative number, a first mobile terminal 10 is selected, and if the user inputs "&" after the representative number, a second mobile terminal 10 is selected.

As described in the present embodiment, since the mobile terminal 10 can originate a call by the private number, problems with home security may be prevented. This also may be useful when a representative number is difficult to be made in a SOHO or the like. Furthermore, since the incoming call by the private number may be originated, the privacy of the user may be protected.

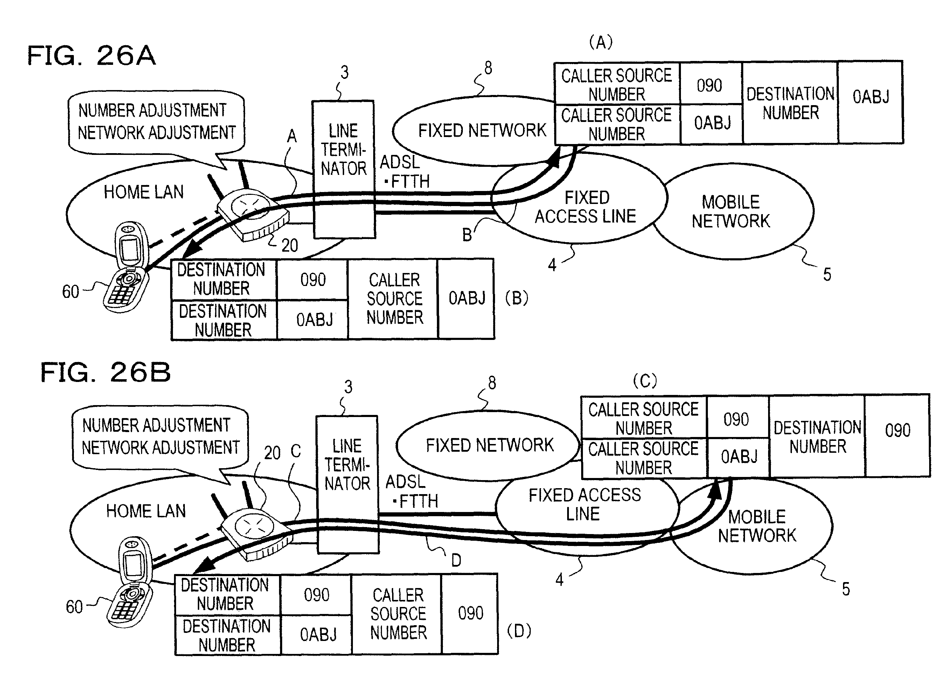

FIG. 26A and FIG. 26B are diagrams illustrating examples of communication performed in the first embodiment to the third embodiment. FIG. 26A and FIG. 26B respectively illustrate a case where the mobile terminal 60 is used. The mobile terminal 10 may also be used to establish a communication path in the same manner. Arrows A to D in FIG. 26A and FIG. 26B indicate established communication paths. The tables (A) to (D) indicate examples of a combination of the incoming call and the caller source number reported to the destination device through the respective communication paths as the arrows A to D.

When a call is originated from the mobile terminal 60, the user selects the number to be reported as the caller source number by the mobile terminal 60 to the destination and selects the network to be used to establish a communication path, and then instructs the mobile terminal 60 to originate a call to the destination device. The mobile terminal 60 reports the number to be reported, to the femtocell 20, as the caller source number to the destination device and the network to use. The femtocell 20 performs an operation of establishing a communication path in accordance with the identified content.

The arrow A indicates an example of a communication path that is established when the fixed network 8 is selected to be used. The caller source number identified by the destination device is either the 090 number (the private number) or the 0ABJ number (the representative number) which is selected. For example, the table (A) indicates an example of a case where the destination device is a fixed phone having the 0ABJ number. The arrow C indicates an example of a communication path that is established when the mobile network 5 is selected to be used. In this case, the caller source number identified by the destination device is also either the 090 number or the 0ABJ number which is selected. For example, the table (C) indicates an example of a case where the destination device is a mobile terminal having the 090 number.

As described above, when the mobile terminal originates a call from the communication area of the femtocell 20, the user may select a network to use. Therefore, the user may select the fixed network 8 when the communication path through the fixed network 8 can provide a lower call charge than by the communication path through the mobile network 5.

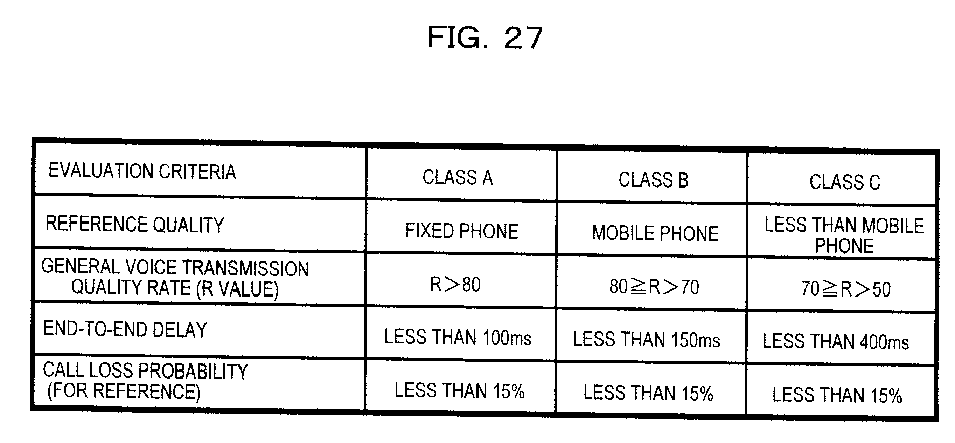

The specification of the network to use can improve the communication quality. FIG. 27 is a table illustrating an example of evaluation criteria of voice conversation quality. In this example, there are three types for the voice quality: Class A, Class B, and Class C. The voice quality is classified into these types for general voice transmission quality rate (R value), End-to-end delay, and call loss possibility (for reference). Class A has a voice quality of a fixed phone, Class B has a voice quality of a mobile phone, and Class C has a voice quality that is lower than that of a mobile phone. If voice and data are present on the same line, the communication quality of the voice may be Class C. The above-described situation may easily occur, particularly when a communication path to a mobile network 5 through the Internet from the femtocell 20 is established. If the user selects the fixed network 8 as a network to use, the communication of Class A, which has the voice quality of a fixed phone, is available even if the mobile terminal 60 is used.

The user may select a call originating number, so that the mobile terminal 60 originates a call by using the representative number when, for example, the user does not want the calling partner to know the private number. This may prevent security problems. Furthermore, a number that is not corresponding to the network used by the mobile terminal 60 may be reported. That is, even when the mobile terminal 60 performs communication through the fixed network 8, the 090 number as the private number may be reported as the caller source number.

On the other hand, the incoming call to the mobile terminal 60 is originated when the femtocell 20 calls one or more mobile terminals 60 corresponding to the incoming call number. The arrow B in FIG. 26A indicates an incoming call from the fixed phone (the 0ABJ number) . The arrow D in FIG. 26B indicates an incoming call from the mobile terminal (the 090 number). Furthermore, the table (B) and the table (D) indicate the combination of the caller source number and the destination number with respect to the arrow B and the arrow D, respectively.

When an incoming call is originated, the femtocell 20 calls the mobile terminal 60 that is specified as a destination. Therefore, if the 0ABJ number used as the representative number is the incoming call number, all of the mobile terminals 60 in the communication area of the femtocell 20 are called. Therefore, the incoming call to the representative number may be originated by using the mobile terminal 60. If the private number is the incoming call number, the specified mobile terminal 60 corresponding to the private number is called. The above-described incoming call method may protect the privacy of the user and may provide the representative number of a plurality of mobile terminals 60.

Furthermore, the use of the femtocell 20 and the mobile terminal 60 or the mobile terminal 10 may promote both businesses of mobile communication service providers and fixed communication providers. Call originating and call terminating with the representative number may be performed by a mobile terminal. This may enhance the mobile communication service. On the other hand, the femtocell 20 has a function strongly depending on the fixed phone line, so that the widespread use of the femtocell 20 may develop business of the fixed communication service. As the function strongly depending on the fixed phone line, a location information acquisition mechanism in an emergency call is provided, for example. Accordingly, the femtocell 20 and the mobile terminal 10, 60 described in the first embodiment to the third embodiment, enable the user to select a network to use and a number to be reported, and not only provide the representative number to call a plurality of terminals but also activate business of communication providers.

### [g] Modifications

The configurations of the femtocell 20 and the mobile terminal 10, 60 according to the first embodiment to the third embodiment and the systems using the femtocell 20 and the mobile terminal 10, 60 are not limited to the above-described embodiments, but may be subject to various modifications. For example, the control under the mobile terminal 10 and the mobile terminal 60 may be performed by software using the control unit 11. Part or all of the control may also be performed by hardware.

Part or all of the control of the femtocell 20 may also be performed by hardware or may be performed by software or any combination thereof. The format of the message and the protocol to be used illustrated in the first embodiment to the third embodiment may be subject to change according to the mounting.

In the embodiment described below, a base station performing radio communication with a mobile terminal is described as the femtocell 20. However, the base station performing radio communication with the mobile terminal is not limited to the base station forming a femtocell. It is possible to use any communication apparatus that may perform radio communication with a mobile terminal and may be connected to the mobile network 5 and the fixed network 8.

In the embodiment in which a network is selectable, it is possible to select a network to use for communication according to a message requesting communication from the mobile terminal. That is, if the communication network information is not specified in the message requesting communication, it may be determined that the network corresponding to the phone number that was used to transmit this message is selected.

## Claims

1. A communication apparatus which performs radio communication with a mobile terminal which is able to originate a call by using either a first phone number or a second phone number as a caller source number, the communication apparatus comprising:
a radio interface unit which performs radio communication with the mobile terminal; and
a transfer unit, wherein when the radio interface unit receives a first call using the first phone number from the mobile terminal, the transfer unit transfers the first call from the mobile terminal to a first communication network corresponding to the first phone number to perform connection processing to a destination device of the first call, and when the radio interface unit receives a second call using the second phone number from the mobile terminal, the transfer unit transfers the second call from the mobile terminal to a second communication network corresponding to the second phone number to perform connection processing to a destination device of the second call.

2. The communication apparatus according to claim 1, further comprising a storage unit which stores correspondence between the first phone number and the first communication network and stores correspondence between the second phone number and the second communication network, and wherein the transfer unit determines a communication network of a destination based on the correspondence stored in the storage unit.

3. The communication apparatus according to claim 1, further comprising a storage unit which stores the correspondence between the first phone number and the first communication network and stores the correspondence between the second phone number and the second communication network according to identification information of the mobile terminal; and
wherein the transfer unit identifies a communication network, as a destination, which corresponds to the identification information and the phone number of the mobile terminal included in the first call or the second call.

4. The communication apparatus according to claim 1, wherein the communication apparatus is configured to include number specification information indicating a phone number to be reported as a caller source number of the mobile terminal to the destination device in a message requesting the destination device to perform the connection processing.

5. The communication apparatus according to claim 4, wherein when a radio communication in which the phone number to be reported to the destination device is specified as the second phone number corresponding to the second communication network is transmitted by using the first phone number, the communication apparatus includes number specification information which specifies the second phone number in a message requesting the destination device to perform the connection processing; and
wherein when a radio communication in which the phone number to be reported to the destination device is specified as the first phone number corresponding to the first communication network is transmitted by using the second phone number, the communication apparatus includes number specification information which specifies the first phone number in a message requesting the destination device to perform the connection processing.

6. A communication apparatus which performs radio communication with a plurality of mobile terminals, the communication apparatus comprising:
a wired interface unit which receives a communication request transmitted from a caller source device to a specified destination number;
a storage unit which stores correspondence of an identification number of the mobile terminal, a common number indicating a number which is common to the plurality of mobile terminals, and an individual number allocated to each mobile terminal; and
a transfer unit which transfers an incoming call to the wired interface unit to process connection processing between any of the plurality of mobile terminals and the caller source device;
wherein the transfer unit processes calling processing of a mobile terminal, which is specified with the destination number, of the plurality of mobile terminals based on the correspondence.

7. The communication apparatus according to claim 6, wherein the transfer unit performs the calling processing to the plurality of mobile terminals when the destination number specifies the common number, and wherein the transfer unit enables communication between the mobile terminal which first responds to the calling processing and the caller source device.

8. The communication apparatus according to claim 6, wherein when the wired interface unit receives a request to start communication with the specified individual number, the transfer unit performs the calling processing for the mobile terminal corresponding to the individual number of the plurality of mobile terminals.

9. The communication apparatus according to claim 6, wherein when the destination number specifies the common number, the transfer unit checks whether or not the communication request includes specification information used to specify one mobile terminal out of the plurality of mobile terminals; and
when the communication request does not include the specification information, the transfer unit performs the calling processing for the plurality of mobile terminals; or
when the communication request includes the specification information, the transfer unit performs the calling processing for the mobile terminal specified by the specification information out of the plurality of mobile terminals.

10. A method of establishing a communication path, comprising:
receiving, at a femtocell, a setup message from a mobile terminal requesting communication between the mobile terminal and a destination device, the setup message identifying a first number used by the mobile terminal to originate the communication, the mobile terminal configured to originate communications by using the first number or a second number;
detecting the first number;
authenticating the first number;
determining whether the setup message includes additional information; and
if the setup message does not include additional information, transmitting, to a network associated with the destination device, a message requesting to establish a communication path with the destination device through the network associated with the destination device, the message identifying the second number to be reported to the destination device.

11. The method of claim 10, wherein detecting the first number comprises detecting an information element in the setup message, the information element storing the first number and an identifier corresponding to the mobile terminal.

12. The method of claim 10, wherein authenticating the first number comprises comparing the first number to a plurality of numbers authorized to communicate with the femtocell.

13. The method of claim 10, wherein the message transmitted to the network associated with the destination device comprises a session initiation protocol (SIP) message.

14. The method of claim 10, further comprising:
determining that the set up message includes additional information, the additional information identifying the first number as a number to be reported to the destination device; and
transmitting, to the network associated with the destination device, a message requesting to establish a communication path with the destination device through the network associated with the destination device, the message identifying the first number to be reported to the destination device.

15. The method of claim 10, wherein the setup message further identifies a network for establishing the communication, the network being selected by a user of the mobile terminal, the method further comprising detecting the identification of the selected network in the setup message.
